(19) Europäisches Patentamt / European Patent Office / Office européen des brevets

(11) **EP 4 326 068 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **22717850.6**

(22) Anmeldetag: **20.04.2022**

(51) Internationale Patentklassifikation (IPC):
**A01N 37/36** (2006.01)   **A01P 1/00** (2006.01)

(52) Gemeinsame Patentklassifikation (CPC):
(C-Sets verfügbar)
**A01N 37/36**                              (Forts.)

(86) Internationale Anmeldenummer:
**PCT/EP2022/060342**

(87) Internationale Veröffentlichungsnummer:
**WO 2022/223573 (27.10.2022 Gazette 2022/43)**

(54) **DESINFEKTIONSMITTEL UND DESSEN VERWENDUNG**

DISINFECTION AGENT AND ITS USE

AGENT DE DÉSINFECTION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 23.04.2021 DE 102021002147
20.05.2021 DE 102021002640

(43) Veröffentlichungstag der Anmeldung:
**28.02.2024 Patentblatt 2024/09**

(73) Patentinhaber: **Meneghini, Thomas**
**87700 Memmingen (DE)**

(72) Erfinder:
• **VEEGER, Marcel**
**47547 Goch (DE)**
• **MENEGHINI, Daniel**
**87746 Erkheim (DE)**
• **MENEGHINI, Thomas**
**87700 Memmingen (DE)**

(74) Vertreter: **Sawodny, Michael-Wolfgang**
**Dreiköniggasse 10**
**89073 Ulm (DE)**

(56) Entgegenhaltungen:
WO-A1-2012/076409     WO-A1-2012/139995
WO-A1-2014/062892     WO-A1-2019/175864
WO-A1-2020/027797     WO-A1-91/00089
WO-A1-99/44444        WO-A2-2019/194780

WO-A2-2019/209223     CN-A- 110 755 289
DE-A1- 102015 113 641  DE-C1- 3 933 964
ES-U- 1 258 594        US-A1- 2002 168 464
US-A1- 2014 275 264    US-A1- 2020 022 905

• BIRNIE C R ET AL: "Antimicrobial evaluation of N-alkyl betaines and N-alkyl, N,N-dimethylamine oxides with variation in chain length", ANTIMICROBIAL AGENTS AND CHEMOTHERAPY, AMERICAN SOCIETY FOR MICROBIOLOGY, US, vol. 44, no. 9, 1 September 2000 (2000-09-01), pages 2514 - 2517, XP002387482, ISSN: 0066-4804, DOI: 10.1128/ AAC.44.9.2514-2517.2000
• STEWARD LISSA: "Acidity Index of Common mouthwashes", 2 January 2016 (2016-01-02), XP055885124, Retrieved from the Internet <URL:https://www.hygienesuperstar. com/wp-content/uploads/2019/05/acidity.pdf> [retrieved on 20220128]

- GLOVER RICHARD E. ET AL: "An EPR investigation of surfactant action on bacterial membranes", FEMS MICROBIOLOGY LETTERS, vol. 177, no. 1, 1 August 1999 (1999-08-01), pages 57 - 62, XP093057659, ISSN: 0378-1097, Retrieved from the Internet <URL:https://watermark.silverchair.com/177-1-57.pdf?token=AQECAHi208BE49Ooan9kkhW_Ercy7Dm3ZL_9Cf3qfKAc485ysgAAAukwggLlBgkqhkiG9w0BBwagggLWMIIC0gIBADCCAssGCSqGSIb3DQEHATAeBglghkgBZQMEAS4wEQQM3BUpT_3yPPUI0JiKAgEQgIlCnGx2h24DfGFW4LdH8umxdeAUGRHFXlcR6HXXhMlfqOiSBjqb7B1dfKbM_IRLx2Se92oY4XZqUKZlRbQZy694Kv_R00D> DOI: 10.1111/j.1574-6968.1999.tb13713.x
- MATSUMURA S ET AL: "SURFACE ACTIVITY, ANTIMICROBIAL PROPERTIES AND BIODEGRADABILITY OF N-ALKYL XYLOSIDES, XYLOBIOSIDES, AND XYLOTRIOSIDES", NIHON YUKAGAKU KAISHI [= JOURNAL OF JAPAN OIL CHEMISTS' SOCIETY], NIHON YUKAGAKKAI, TOKYO, JP, vol. 47, no. 3, 1 January 1998 (1998-01-01), pages 247 - 255, XP009036557, ISSN: 1341-8327
- BLAGOJEVIC S M ET AL: "Synergism and Physicochemical Properties of Anionic/Amphoteric Surfactant Mixtures with Nonionic Surfactant of Amine Oxide Type", RUSSIAN JOURNAL OF PHYSICAL CHEMISTRY A, CHEMICAL SOCIETY, LONDON, GB, vol. 91, no. 13, 6 February 2018 (2018-02-06), pages 2690 - 2695, XP036426996, ISSN: 0036-0244, [retrieved on 20180206], DOI: 10.1134/S0036024417130064
- .: "Amphiphile Moleküle: Ein einführender Überblick", 6 June 2005 (2005-06-06), Germany, pages 1 - 19, XP055936161, Retrieved from the Internet <URL:https://www.tuchemnitz.de/physik/OSMP/Soft/V_09.pdf> [retrieved on 20220628]
- .: "EUROXIDE D40 performance enhancer in hard surface cleaners", 1 July 2016 (2016-07-01), Belgium, pages 1 - 2, XP055936166, Retrieved from the Internet <URL:https://eocgroup.com/sites/default/files/EOC%20Surfactants%20Product%20Leaflet%20Euroxide%20D40%20July%202016.pdf> [retrieved on 20220628]

(52) Gemeinsame Patentklassifikation (CPC): (Forts.)

C-Sets
**A01N 37/36, A01N 25/02, A01N 25/30, A01N 37/10**

# EP 4 326 068 B1

**Beschreibung**

Die vorliegende Erfindung bezieht sich auf ein Desinfektionsmittel und dessen Verwendung.

**Hintergrund der Erfindung**

Die weltweite Virus-Pandemie hat gezeigt, dass Mittel zur Reduzierung der Bakterien- und auch Virusbelastung von großer Bedeutung sind. Es gibt daher einen wachsenden Bedarf an Desinfektionsmitteln, die insbesondere als Händedesinfektionsmittel, Lebensmitteldesinfektionsmittel und Flächendesinfektionsmittel wirksam sind.

Desinfektionsmittel sind üblicherweise chemische Zusammensetzungen oder Verbindungen zur Flächen-, Instrumenten-, Lebensmittel- oder Hautdesinfektion sowie zur Wasserentkeimung. Je nach den hauptsächlich zu bekämpfenden Krankheitserregern, insbesondere Bakterien, Viren, Pilzen und dergleichen, weisen die Desinfektionsmittel bakterizide, viruzide bzw. Virus-inaktivierende und leuvorizide (fungizide) Wirksamkeiten auf. Eine Desinfektion bedeutet hierbei eine Keimreduktion, die in einem festgelegten Testverfahren überprüft wird, wobei vermehrungsfähige Keime, d.h. sogenannte koloniebildende Einheiten pro gramm (KBE/g) untersucht und eine Keimreduktion beobachtet wird.

Desinfektionsmittel haben vielseitige Anwendungen: Diese können im klinischen Bereich, z.B. in Krankenhäusern oder Arztpraxen, im öffentlichen Bereich, z.B. in Schwimmbädern, oder im privaten Bereich, z.B. in der Kosmetik oder im Haushalt, eingesetzt werden und unterliegen seit einigen Jahren einem Zulassungsverfahren. Die Verwendung einzelner Produkte kann auf bestimmte Personengruppen, wie besonders qualifizierte Personen, beschränkt sein.

Nachteilig an vielen stark-wirksamen Desinfektionsmitteln ist, dass diese nicht nur die gesundheitsschädlichen Keime zerstören, sondern auch die Haut oder Flächen, für die sie eingesetzt werden, schädigen können. So enthalten starke Desinfektionsmittel in der Regel starke Oxidationsmittel, die beispielsweise die Schleimhäute reizen und schädigen können. Schwach-wirksame Desinfektionsmittel schädigen demgegenüber zwar die Haut oder zu desinfizieren Fläche nicht, wirken aber nicht ausreichend keimabtötend. Es ist daher stets von Interesse Desinfektionsmittel zu entwickeln, die die Keime zwar schnell und auch nachhaltig zerstören, aber wenn diese zur Händedesinfektion herangezogen werden, die Hautflora nicht auf Dauer wesentlich beeinträchtigen.

Weiterhin können insbesondere starke Desinfektionsmittel nachteilige Auswirkungen auf die Umwelt haben. Beispielsweise wirken Phenole, die in vielen Desinfektionsmitteln enthalten sind, ökotoxisch auf Gewässer und zerstören auch Bakterienarten, die für die Reinigungswirkung in Gewässern wichtig sind. Viele Desinfektionsmittel sind ätzend, reizen die Haut und/oder Schleimhäute, sind entflammbar oder sogar explosiv oder können in Mischung mit anderen Haushaltsreinigern giftiges Chlorgas freisetzen. Darüber hinaus sind auch toxische und karzinogene Desinfektionsmittel bekannt, die auch Allergien auslösen können. Es besteht daher ein großes Interesse an hautverträglichen Desinfektionsmitteln, die nicht nur zur Flächendesinfektion, sondern auch zur Händedesinfektion und Lebensmitteldesinfektion unbedenklich eingesetzt werden können und gleichzeitig die auf der Haut der Hände befindliche Keimbesiedelung weitgehend reduzieren. Wünschenswert ist es, dass diese beispielsweise Bakterien, Viren und Pilze abtöten oder deaktivieren. Hierdurch kann zudem eine Keimübertragung von einer Person zur anderen verhindert werden.

Aus dem Stand der Technik sind zahlreiche Desinfektionsmittel bekannt geworden. Es sollen hier einige herausgegriffen und im Einzelnen kurz erläutert werden:

So sind beispielsweise Desinfektionsmittel, die Zitronensäure zur pH-Wert-Regulierung, als Chelatbildner oder zum Entkalken enthalten, bekannt:

Die DE 37 02 546 A1 beschreibt ein Desinfektionsmittel für den medizinischen Bereich, insbesondere zur Verwendung in Arztpraxen oder Krankenhäusern, wobei als Wirkstoff Isothiazolin-3-Oxi und/oder ein Derivat bzw. Derivate davon umfasst ist. Zur pH-Wert-Regulierung im Bereich zwischen etwa pH 4,5 und etwa pH 10,5 wird eine schwache organische Säure, wie beispielsweise Essigsäure, Zitronensäure, Harnsäure, Glukonsäure, Aminosulfonsäure, Isothionsäure oder Sulfophthalsäure zugesetzt.

Die EP 2 677 867 B1 von der Fa. Salveco beschreibt eine konzentrierte biozide Formulierung pflanzlichen Ursprungs, die Verbindungen pflanzlichen und erneuerbaren Ursprungs umfasst, wobei die Verbindungen vollständig biologisch abbaubar sind. Diese enthält:

- zwischen 0,01 % und 20% Chelatbildner, ausgewählt aus Zitronensäure aus Zitronensaft, Sorbinsäure aus dem Vogelbeerbaum, Oxalsäure aus den Wurzeln oder Rhizomen von Pflanzen, Zichorien-Extrakte;
- zwischen 0,03% und 25% nichtionische Tenside der Art Glycoside, Polyglycerinester oder Sorbitanester;
- zwischen 0,03% und 25% anionische Tenside, ausgewählt aus den Carboxylatsalzen von polyethoxyliertem/propoxyliertem Alkyl und/oder Polyolen der Art Polyglycoside und/oder Polyglycerine, Alkali- oder Erdalkalimetallen, und solche, die mit sauren chemischen Strukturen verbunden sind, um Tenside der Art Alkylcarboxylat und/oder Alkylsulfate zu bilden, wobei die anionischen Tenside eine Kohlenstoffkette aufweisen, die zwischen 6 und 20 Kohlenstoffatome umfasst;

- zwischen 0,1% und 75% von mindestens einer organischen Säure, ausgewählt aus Zitronensäure, Milchsäure und Bernsteinsäure;
- zwischen 0,001% und 8% natürlicher Duft, ausgewählt aus den ätherischen Ölen, pflanzlichen Essenzen und den Pflanzenextrakten, wie A-Minze, N-Minze oder G-Eukalyptus. Ein Benzoat oder Benzoesäure wird hier jedoch nicht erwähnt.

Weiterhin offenbart die JP-A-2002-253188 ein Desinfektionsmittel zur Desinfektion von Händen und Oberflächen in der Lebensmittel-verarbeitenden Industrie, das eine organische Säure, ausgehend von Citraten und Lactaten, und Alkohol, wie Ethanol, enthält. Diese Desinfektionsmittel haben mikrobiozide Wirksamkeit.

Ferner beschreibt die EP 2 135 507 A1 ein Desinfektionsmittel für die Hand- und Hautdesinfektion, das, jeweils bezogen auf das gesamte Desinfektionsmittel, die folgenden Bestandteile (a), (b), (c) und (d), aber keine weiteren desinfizierenden Wirkstoffe für die mikrobiozide Desinfektion aufweist:

(a) 40 bis 90 Gew.-% Ethanol, Isopropylalkohol oder eine Mischung davon;
(b) 0,1 bis 2 Gew.-% Milchsäure;
(c) 0,01 bis 2 Gew.-% Zitronensäure; und
(d) 0,001 bis 0,1 Gew.-% einer Zink-enthaltenden Verbindung, die in Lösung Zinkionen freisetzt. Zinkionen können jedoch für die Anwendung auf der Haut nachteilig sein, da diese die Haut austrocknen und schwer entfernbare Beläge hinterlassen können. Zink-enthaltende Verbindungen, Ethanol sowie Isopropylalkohol sind im erfindungsgemäßen Desinfektionsmittel bevorzugt nicht enthalten.

Die DE 102 23 934 A1 beschreibt ein Desinfektionsmittel auf wässriger Basis, das

a) mindestens ein Alkylamin und/oder mindestens eine quartäre Ammoniumverbindung und
b) mindestens eine Fettsäure RCOOH und/oder deren Salz umfasst,

wobei R eine Gruppe mit mindestens 7 Kohlenstoffatomen ist,
sowie die Verwendung des Desinfektionsmittels zur Inaktivierung des Hepatitis B-Virus. Neben diesen Komponenten umfasst das Desinfektionsmittel gegebenenfalls kurzkettige organische Säuren, wie Milchsäure, Glykolsäure, Zitronensäure, Äpfelsäure, Bernsteinsäure, Weinsäure, Ameisensäure, Essigsäure, Propionsäure oder deren Salze, um die Aminformulierung auf den bevorzugten pH-Wert von 9,0 bis 9,5 einzustellen.

Weiterhin betrifft die DE 10 2007 045 210 A1 eine Mischung zum Entkalken, Reinigen und/oder Desinfizieren, umfassend mindestens 25 Gew.-%, bezogen auf die Gesamtmenge der Mischung, Zitronensäure und 0,1-75 Gew.-%, bezogen auf die Gesamtmenge der Mischung, einer Zusatzmischung, umfassend Apfelsäure und/oder Weinsäure.

Ferner werden Desinfektionsmittel, die Zitronensäure enthalten, auch gegen Viren und Bakterien eingesetzt: Beispielsweise bezieht sich die DE 42 00 066 A1 auf die Verwendung eines gegebenenfalls in Konzentratform vorliegenden wässerigen Desinfektionsmittels mit einem Gehalt an Zitronensäure als viruzidem, bakterizidem und sporizidem Wirkstoff zur Inaktivierung von Hepatitis-B-Viren, bakteriellen Sporen und Legionella pneumophila bei der Desinfektion von thermolabilen medizinischen Instrumenten und Geräten sowie Teilen derselben, Dialysemaschinen und Flächen. Optional kann Äpfelsäure und/oder Milchsäure zugegeben werden.

Des Weiteren beschreibt die WO 96/09761 A1 (EP 0 783 245 B1 von Unilever N.V.) ein Desinfektionsmittel, das für den Verzehr geeignet ist und daher bevorzugt bei der Herstellung von Nahrungsmitteln und Getränken eingesetzt wird. Die Desinfektionszusammensetzung umfasst:

(a) ein anionisches Tensid, ausgewählt aus einem Alkalisalz eines $C_{10}$-$C_{18}$-Alkylsulfats und einem Alkalisalz von Di-($C_6$-$C_{10}$-alkyl)sulfosuccinat;
(b) eine Säure, ausgewählt aus Zitronensäure, Phosphorsäure, Schwefelsäure, Salzsäure, Essigsäure, Gluconsäure, Milchsäure, Propionsäure, Äpfelsäure und Weinsäure und
(c) ein nichtionisches Tensid, das einen polyethoxylierten Sorbitanester umfasst, der leicht in Wasser löslich ist. Ferner kann optional auch Benzoesäure oder Natriumbenzoat zugegeben werden. Das erfindungsgemäße Desinfektionsmittel ist gegenüber der WO 96/097761 A1 nur für die äußere Anwendung vorgesehen. Die Verwendung von Benzoesäure/Natriumbenzoat ist nur optional und führt daher von der vorliegenden Erfindung eher weg. Zudem ist ein anionisches Tensid im erfindungsgemäßen Desinfektionsmittel nicht vorhanden. Die Verwendung von Alkoholen, wie Isopropanol oder Ethanol als Lösungsmittel, wie in der WO 96/097761 A1 beschrieben, ist zudem im erfindungsgemä-βen Desinfektionsmittel nicht erwünscht.

Weiterhin sind auch Zusammensetzungen bekannt geworden, die Benzoate als Konservierungsmittel enthalten:

So beschreibt die DE 10 2006 010 809 A1 ein Solubilisat eines Konservierungsmittels, um Lebensmittel, vornehmlich Getränke, gegen Befall von Mikroorganismen besser zu schützen. Das wasserfreie Solubilisat eines Konservierungsmittels umfasst Sorbinsäure und/oder Benzoesäure sowie einen oder mehrere Emulgatoren mit einem HLB-Wert zwischen 9 und 16, insbesondere ein Polysorbat. Es wird beschrieben, dass ausschließlich die undissoziierte Säure die bakterizide Wirkung entwickeln soll.

Die folgenden Veröffentlichungen beschreiben antimikrobiell wirksame Zusammensetzungen, die Zitronensäure und Benzoat enthalten können:

In MEDOFFICE: Med-Cover Lemon Glycerin Swab Stick 6, Material Safety Data Sheet, Izmir, Türkei, 2018 wird ein Hautpflegeprodukt in Form eines Stifts oder als wässrige Lösung bereitgestellt. Die Zusammensetzung umfasst u.a. Natriumbenzoat, Zitronensäure, Polysorbat 80, Zitronenaroma und Chlorhexidindiglukonat. Die Zusammensetzung wirkt, insbesondere aufgrund des Chlorhexidindiglukonats, antimikrobiell. Im erfindungsgemäßen Desinfektionsmittel liegt jedoch kein Chlorhexidindiglukonat vor.

Die US 2020/0 120 928 A1 offenbart Feuchttücher, die eine Reinigungszusammensetzung aufweisen, die umfasst:

- ein konservierungsverstärkendes Mittel, umfassend zwischen etwa 0,12 Gew.-% und etwa 1,0 Gew.-% Sorbitancaprylat;
- ein Konservierungsmittel, das Benzoesäure oder ein Salz hiervon umfasst; und
- ein Citrat-Zitronensäure-Puffersystem oder Zitronensäure;

wobei die Reinigungszusammensetzung mindestens 97,1 Gew.-% Wasser umfasst; das Konservierungsmittel und das konservierungsverstärkende Mittel etwa 0,24 Gew.-% bis etwa 1,12 Gew.-% der Reinigungszusammensetzung umfassen; die Reinigungszusammensetzung einen pH-Wert von weniger als 5 aufweist; und das Konservierungsmittel zu dem konservierungsverstärkenden Mittel in der Reinigungszusammensetzung ein Gewichtsverhältnis von etwa 1:0,5 bis etwa 1:5 aufweist. Die Reinigungszusammensetzung kann als weiteren Bestandteil nichtionische und amphotere Tenside aufweisen. Im erfindungsgemäßen Desinfektionsmittel liegt jedoch kein Sorbitancaprylat vor.

Ferner beschreibt die WO 2018/022 016 A1 eine flüssige Reinigungszusammensetzung, umfassend:

eine reinigende Komponente; und
ein antibakterielles System, wobei das antibakterielle System umfasst:

ein antibakterielles Mittel; und
ein antibakterielles Verstärkungsmittel, insbesondere ausgewählt aus einer organischen Säure, wie Zitronensäure, Essigsäure, Milchsäure, Glykolsäure, Ameisensäure, Buttersäure, Propionsäure, Valeriansäure, Apfelsäure, Oxalsäure, Kohlensäure, Taurin und Kombinationen hiervon, wobei das Gewichtsverhältnis des antibakteriellen Mittels zu dem antibakteriellen Verstärkungsmittel größer oder gleich etwa 0,30:1 und kleiner oder gleich 0,65:1 ist. Das antibakterielle Mittel ist Phenoxyethanol, das gemäß der Beispiele als wesentlicher Bestandteil für die antimikrobielle Wirksamkeit angesehen wird. Nichtionische Tenside werden ebenfalls als mögliche Bestandteile beschrieben. Als beispielhaftes Konservierungsmittel wird u.v.a. Natriumbenzoat erwähnt. Im erfindungsgemäßen Desinfektionsmittel liegt jedoch kein Phenoxyethanol vor.

Weiterhin bezieht sich die WO 2020/165 566 A1 auf eine wässrige flüssige Zusammensetzung, die topisch antimikrobiell wirkt, wobei die Zusammensetzung umfasst:

a) 0,001 Gew.-% bis 1 Gew.-% Tensid,
b) mindestens eine Carbonsäure oder ein Salz hiervon, wie Zitronen- oder Milchsäure, und

wobei die wässrigen flüssigen Zusammensetzungen einen pH-Wert von etwa 4,7 oder weniger aufweisen. Als Konservierungsmittel werden Benzoate, insbesondere Natriumbenzoat beschrieben. Das Konservierungsmittel soll bevorzugt in Mengen von bis zu etwa 1,5 Gew.-% vorliegen, wobei in den Beispielen jedoch nur bis zu 0,2 Gew.-% Natriumbenzoat eingesetzt werden.

Die US 2014/275264 A1 offenbart eine wässrige Zusammensetzung, umfassend: (a) mindestens eine erste organische Säure und (b) mindestens eine zweite organische Säure, wobei die erste organische Säure von der zweiten organischen Säure verschieden ist. In einer Ausführungsform ist die organische Säure Zitronensäure und das Verhältnis von Zitronensäure zur zweiten organischen Säure kann von 32:1 bis 1:32 oder von 8:1 bis 1:32 oder von 8:1 bis 1:16 betragen. Die zweite Säure ist beispielsweise ausgewählt aus Propionsäure, Benzoesäure oder deren Salzen. Es sind keine nichtionischen oder amphoteren Tenside enthalten.

Die WO 99/44444 A1 beschreibt ein Verfahren zur Verringerung der Bakterienzahl auf einem frischen Lebensmittel, bei dem der Verdacht besteht, dass es mit mindestens einem lebensmittelbedingten Krankheitserreger kontaminiert ist, wobei das Verfahren den Schritt des In-Kontakt-Bringens des frischen Lebensmittels mit einer dekontaminierenden Lösung umfasst, die einen ersten aktiven Bestandteil umfasst, wobei der erste aktive Bestandteil eine Säure in einer Konzentration von etwa 0,3 bis etwa 5 Prozent (Volumen/Volumen) ist, die aus der Gruppe ausgewählt ist, die aus Milch-, Essig-, Äpfel-, Propion-, Wein-, Mandel- und Phosphorsäure besteht, und einen zweiten aktiven Bestandteil, ausgewählt aus der Gruppe, bestehend aus Wasserstoffperoxid in einer Konzentration von etwa 0,1 % bis 5 %, Glycerinmonolaurat in einer Konzentration von etwa 0,0001 % bis etwa 0,1 % (Vol./Vol.) und Natriumbenzoat in einer Konzentration von etwa 0,005 % bis etwa 0,5 %, wobei das frische Lebensmittel mit der Dekontaminierungslösung für eine Dauer und bei einer Temperatur in Kontakt ist, die ausreicht, um die Anzahl von mindestens einem durch Lebensmittel übertragenen Krankheitserreger um das mindestens 1000-fache zu reduzieren. Es sind keine nichtionischen oder amphoteren Tenside enthalten.

Die DE 39 33 964 C1 bezieht sich auf ein Verfahren zur Sanitärreinigung mit einem Sanitärreiniger in flüssiger oder fester Form mit einem Gehalt an keimhemmenden sauren organischen Stoffen bzw. deren Salzen, an üblichen kalklösenden wasserlöslichen Säuren und gegebenenfalls an weiteren Additiven, wobei man gegen die kalklösende wasserlösliche Säure beständige keimfördernde organische Säuren bzw. Salze in Form von Aminosäuren, 4-Aminobenzoesäure und/oder Orotsäure und/oder Vitamine in einer Konzentration von 10 bis 1000 mg/kg Sanitärreiniger (Trockensubstanz) und als keimhemmende saure organische Stoffe Benzoesäure, Sorbinsäure, Propionsäure und/oder Ameisensäure bzw. deren Salze in einer solchen Menge einsetzt, dass die keimhemmenden Stoffe in einer Konzentration einwirken, die in der Wirkungsphase in der zu behandelnden Sanitäreinrichtung mindestens das Doppelte und höchstens das 200fache der Minimalen Hemmkonzentration(MHK) beträgt. Es sind keine nichtionischen oder amphoteren Tenside enthalten.

Die WO 91/ 000089 A1 betrifft Arzneimittel für Menschen und Tiere und andere Verwendungen verschiedener Säuren und Salze zur Heilung von Krankheiten, die z.B. durch Viren, Pilze und Bakterien verursacht werden. Herpes labialis soll beispielweise durch Auftragen einer Lösung von Benzoesäure E 210 oder Natriumbenzoat E 211 und Zitronensäure E 330 geheilt werden. Zur Bekämpfung nichtumhüllter Viren wird zusätzlich das anionische Tensid Natriumdodecylsulfat zugegeben. Es werden keine nichtionischen oder amphoteren Tenside beschrieben.

Die WO 2012/139995 A1 betrifft ein Verfahren zur Verhinderung von bakteriellem Wachstum in einem Getränkespendersystem. Hierfür wird ein bakteriostatisches Mittel eingesetzt, das eines oder mehrere von Kaliumsorbat, Natriumbenzonat, Zitronensäure, Weinsäure, hydrophilem Siliziumdioxid, 1,2-Dihydroxypropan und Glycerin umfasst. Es sind jedoch keine nichtionischen oder amphoteren Tenside enthalten.

Gemäß der US 2002/168464 A1 wird eine lagerstabile Beschichtung für Pfannen und ein ungiftiger Reiniger für Kochflächen bereitgestellt, der a) Wasser; b) Mono- und Diglyceride; c) Polysorbat; d) eine antimikrobiell wirksame Menge an Zitronensäure; e) eine antimikrobiell wirksame Menge an Essigsäure; f) eine antimikrobiell wirksame Menge an Natriumbenzoat umfasst. Die erfindungsgemäßen Tenside werden nicht offenbart.

Die DE 10 2015 113 641 A1 offenbart Desinfektionsmittel zur Desinfektion unbelebter Oberflächen, das insbesondere besteht aus

(a) 0,1-10 Gew.-% mind. einer organischen Säure, ausgewählt aus Essigsäure, Propionsäure oder eine Kombination dieser,
(b) ggf. 0,01-1 Gew.-% Milchsäure,
(c) 0,01-10 Gew.-% Natriumbenzoat,
(d) 0-2 Gew.-% Lösungsvermittler, ausgewählt aus Hexylcarbitol, Propylenglykol, Methylcarbitol, Butylcarbitol, Monoethylenglykol oder eine Kombination dieser, bevorzugt Hexylcarbitol und/oder Propylenglykol, und
(e) Wasser,

wobei sich die Komponenten zu 100 Gew.-% ergänzen und wobei die Summe aus (a) + (b) $\leq$ 1 Gew.-% ist, wenn (b) $\neq$ 0 oder die Summe aus (a) + (b) > 0,1 Gew.-% ist. Als nichtionische Tenside werden in den Beispielen 4 und 5 0,4 Gew.-% Marlipal® 1618/25 (ein lineares Alkoholethoxylat) und in den Beispielen 8 und 12 4,0 Gew.-% Dehydol® 04 DEO (C8-Fettakohol mit ca. 4 mol EO) beschrieben. Erfindungsgemäß werden andere nichtionische Tenside in anderen Mengenbereichen verwendet.

Die WO 2014/062892 A1 bezieht sich auf eine antivirale Zusammensetzung, die Eucalyptol, Menthol und Holunderextrakt enthält. Die Zusammensetzung enthält außerdem mindestens eine zusätzliche Verbindung, die aus der Gruppe ausgewählt ist, die aus Poloxamer 407, Xyitol, Saccharin, Sorbitol, Glycerin, Natriumbenzoat, Octoxynol-9, Zitronensäure, Natriumchlorid, Thymol, Ethanol und Methylsalicylat besteht._Die Zusammensetzungen enthalten Ethanol, der erfindungsgemäß ausgeschlossen ist.

Die ES 1 258 594 U bezieht sich auf eine alkalische wässrige Reinigungsformulierung, die beispielweise umfasst:

- 0,75 - 2 Gew.-% mindestens eines Tensids,
- < 4 Gew.-% mindestens eines Maskierungsmittels,
- 0,1 - 0,3 Gew.-% mindestens eines Konservierungsmittels,
- 0,05 - 0,15 Gew.-% Zitronensäure
- 0,1 - 0,3 Gew.-% mindestens eines Parfüms,
- 0,0005 - 0,001 Gew.-% mindestens eines Farbstoffs und
- eine ausreichende Menge an osmotischem Wasser,

wobei die Summe der Menge aller Bestandteile kleiner oder gleich 100% ist und einen pH-Wert zwischen 7 und 11,50 aufweist. Das Tensid kann ein nichtionisches Tensid sein. Als Konservierungsmittel wird u.a. Natriumbenzoat erwähnt. Erfindungsgemäß wird ein saures Desinfektionsmittel eingesetzt, bei dem die eingesetzten Tenside in anderen Mengenbereichen vorliegen.

Blagojevic S.M. et al.: "Synergism and Physicochemical Properties of Anionic/Amphoteric Surfactant Mixtures with Nonionic Surfactant of Amine Oxide Type", Russian Journal of Physical Chemistry A, Chemical Society, London, GB, Bd. 91, Nr. 13, 2017, S. 2690-2695, "Amphiphile Moleküle: Ein einführender Überblick", 6. Juni 2005, S. 1-19, Internet: URL:https://www.tuchemnitz.de/physik/OSMP/Soft/V 09.pdf und "Euroxide D40 performance enhancer in hard surface cleaners", 2016, S. 1-2; Internet: URL:https://eocqroup.com/sites/default/files/ E-OC%20Surfactants%20Product% 20Leaflet%20Euroxide%20D40%20July%20216.pdf beschäftigen sich mit dem technologischen Hintergrund, wonach Aminoxide auch den nichtionischen Tensiden zugeordnet werden können. Demgegenüber werden erfindungsgemäß die Aminoxide als amphotere Tenside angesehen.

Die WO 2020/027797 A1 beschreibt eine Zusammensetzung, die umfasst: einen Träger, der mindestens 90 % des Gesamtgewichts der Zusammensetzung ausmacht; ein antimikrobielles Mittel; und ein antimikrobielles Verstärkungsmittel, das ein Amphocarboxylat umfasst, wobei das antimikrobielle Verstärkungsmittel 1,0 % oder weniger des Gesamtgewichts der Zusammensetzung ausmacht; wobei die Zusammensetzung im Wesentlichen frei von einem kurzkettigen Alkohol ist. Konkrete Zusammensetzungen enthaltend eine organische Säure, ausgewählt aus Zitronensäure, Milchsäure und Bernsteinsäure, sind nicht beschrieben.

Die WO 2019/194780 A2 beschäftigt sich mit einer kosmetischen Zusammensetzung, die zum Beispiel 5-35 Gew.-% antimikrobiellen Pflanzenextrakt, 0,1 - 5 Gew.-% Panthenol, >0 -1 Gew.-% Harnstoff und >0 -1 Gew.-% Milchsäure enthält. Es werden andere amphotere oder nichtionische Tenside in anderen Mengenbereichen als erfindungsgemäß offenbart.

Die CN 110 755 289 A richtet sich auf ein Mundwasser für Kinder, das aus einem Feuchthaltemittel, Natriumbenzoat, Azepamchlorid, Alkylglykosiden, Natriumcitrat, Zitronensäure, einem Süßstoff, essbarem Aroma und deionisiertem Wasser besteht, wobei vorliegen: 7-25 Gewichtsteile Feuchthaltemittel, 1-3 Gewichtsteile Natriumbenzoat, 3-9 Gewichtsteile Azepamchlorid, 1-3 Gewichtsteile Alkylglycosid, 1-3 Gewichtsteile Natriumcitrat, 0,5-2 Gewichtsteile Zitronensäure, 0,2-0,6 Gewichtsteile Süßstoff, 0,1-0,4 Gewichtsteile essbares Aroma und 25-45 Gewichtsteile deionisiertes Wasser. Die Menge an Feuchthaltemittel liegt außerhalb des erfindungsgemäßen Bereichs.

WO 2019/209223 A2 beschreibt eine reinigende und pflegende kosmetische Zusammensetzung, die den Saft der Blüte von Chamomilla recutita und den Extrakt von Malva sylvestris umfasst. Als Zusätze werden u.a. nichtionische Tenside und amphotere Tenside beschrieben. Es werden andere Tenside als in der vorliegenden Erfindung eingesetzt.

Die WO 2012/076409 A1 offenbart topische vaginale Zusammensetzungen in Gelform. Das Desinfektionsmittel enthält beispielsweise Milchsäure, Natriumbenzoat und Polysorbat 60 sowie Phenoxyethanol, das erfindungsgemäß jedoch ausgeschlossen ist.

Die WO 2019/175864 A1 bezieht sich auf eine Verabreichungsvorrichtung, um den anatomischen Beckenkanal, insbesondere Vaginalbereich, eines menschlichen Subjekts mechanisch zu erweitern, wobei die Vorrichtung eine Gel-Zusammensetzung umfasst, die aufweist:

   (a) ein natürlich vorkommendes Polysaccharid;
   (b) Wasser in einer Menge von etwa 60 % bis etwa 88 % des Gewichts der Zusammensetzung;
   (c) ein oberflächenaktives Mittel in einer Menge im Bereich von 0 bis etwa 5 Gew.-% der Zusammensetzung;
   (d) Öl in einer Menge im Bereich von 0 bis etwa 40 Gew.-% der Zusammensetzung;
   (e) ein Vernetzungsmittel; und
   (f) ein hydrophiles Mittel und/oder ein hydrophobes Mittel, die jeweils eine positive oder therapeutische Wirkung im anatomischen Beckenkanal haben. Das Gel ist nicht als Desinfektionsmittel für die äußere Anwendung geeignet.

Die US 2020/022905 A1 beschreibt eine Zusammensetzung, die für die bukkale Absorption von Nikotin in den Blutkreislauf und die Verteilung an das zentrale Nervensystem zum Zweck der Raucherentwöhnung oder der Nikotinsubstitution unter für das Rauchen ungünstigen Bedingungen bestimmt ist, wobei sie eine Nikotinlösung in Form einer Base und/oder ihres Salzes mit einer organischen Säure in einer Konzentration von 0,01 bis 8,00 Gew.-% enthält sowie Substanzen mit schleimlösender Wirkung. Die erfindungsgemäßen Tenside werden nicht beschrieben.

Steward Lissa: "Acidity Index of Common mouthwashes", 2. Januar 2016 URL:https:// www.hygienesuperstar.com/wp-content/uploads/2019/05/acidity.pdf beschreibt saure Mundspüllösungen mit pH-Werten zwischen ca. 3.3 und 6.5. Zusammensetzungen mit Zitronensäure, Milchsäure und/oder Bernsteinsäure sowie bestimmten Tensiden werden nicht beschrieben.

BIRNIE C. R. ET AL: "Antimicrobial evaluation of N-alkyl betaines and N-alkyl-N,N-dimethylamine oxides with variations in chain length", Antimicrobial Agents and Chemotherapy, American Society for Microbiology, US, Bd. 44, Nr. 9, 1. September 2000, Seiten 2514-2517, Doi: 10.1128/Aac.44.9.2514-2517.2000; Matsumura S. et al: "Surface Activity, Antimicrobial Properties and Biodegradability of n-Alkyl Xylosides, Xylobiosides, and Xylotriosides", Nihon Yukagaku Kaishi Journal of Japan Oil Chemists' Society, Nihon Yukagakkai, Tokyo, JP, Bd. 47, Nr. 3, 1. Januar 1998, Seiten 247-255, und Glover Richard E. et al: "An EPR Investigation of Surfactant Action On Bacterial Membranes", Fems Microbiology Letters, Bd. 177, Nr. 1, 1. August 1999, Seiten 57-62, Doi: 10.1111/L1574-6968.1999.Tb13713.X beschreiben, dass bestimmte Tenside, wie $C_{12}$-$C_{14}$-Aminoxide oder Alkylglycoside, eine antimikrobielle Wirkung besitzen, die jedoch nicht schnell genug erfolgt, um als Desinfektionsmittel überhaupt eingesetzt werden zu können.

Der Erfindung liegt nun die Aufgabe zugrunde, ein verbessertes Desinfektionsmittel bereitzustellen, das die Keimbelastung durch Bakterien, Viren, Pilze und dergleichen deutlich reduziert, und zur Händedesinfektion, Lebensmitteldesinfektion und auch Flächedesinfektion geeignet ist. Zudem soll das Desinfektionsmittel möglichst hautverträglich sein und umweltverträgliche Bestandteile enthalten und keine starken Oxidationsmittel, wie Chlor, Wasserstoffperoxid, oder $C_1$-$C_3$-(Iso)-Alkohole. Zudem soll eine schnell einsetzende desinifizierende Wirkung bei gleichzeitig breitem bakterizidem Wirkungsspektrum vorliegen.

**Beschreibung der Erfindung**

Die vorstehend geschilderte Aufgabe wird erfindungsgemäß durch die Merkmale der unabhängigen Ansprüche gelöst. Die Unteransprüche stellen bevorzugte Ausgestaltungen der Erfindung dar.

Insbesondere wird ein Desinfektionsmittel bereitgestellt, umfassend

eine organische Säure, ausgewählt aus der Gruppe, bestehend aus Zitronensäure, Milchsäure und Bernsteinsäure, oder eine Mischung dieser;

ein Benzoat, ausgewählt aus der Gruppe, bestehend aus Natriumbenzoat, Kaliumbenzoat oder Calciumbenzoat, oder Mischungen dieser;

ein oder mehrere Tenside, ausgewählt aus der Gruppe nichtionischer Tenside und/oder amphoterer Tenside, die in Wasser löslich oder emulgierbar oder dispergierbar sind,

das Desinfektionsmittel in wässriger flüssiger Zusammensetzung oder fester Zusammensetzung vorliegt,

wobei eine wässrige flüssige Zusammensetzung des Desinfektionsmittels die ein oder mehreren nichtionischen Tenside in einer Menge im Bereich von 1,1 bis 3 Gew.-% enthält und/oder die ein oder mehreren amphoteren Tenside in einer Menge im Bereich von 1,1 bis 24 Gew.-% enthält,

die feste Zusammensetzung ein Konzentrat darstellt und die wässrige flüssige Zusammensetzung das Konzentrat in verdünnter Form darstellt, in der die ein oder mehreren nichtionischen Tenside in einer Menge von 1,1 bis 3 Gew.-% und/oder die ein oder mehreren amphoteren Tenside in einer Menge von 1,1 bis 24 Gew.-% enthalten sind, und das Desinfektionsmittel nur für die äußere Anwendung vorgesehen ist,

wobei die ein oder mehreren nichtionischen Tenside ausgewählt sind aus der Gruppe, bestehend aus Fettalkoholalkoxylaten, Alkylpolyglucosiden oder Alkylpolyglycosiden (APGs), jeweils alleine oder Mischungen dieser,

wobei die ein oder mehreren amphoteren Tenside ausgewählt sind aus der Gruppe, bestehend aus Aminoxiden und bei Vorliegen von einem oder mehreren nichtionischen Tensiden gleichzeitig ein oder mehrere Mittel zur Feuchtigkeitsregulierung vorliegen, die in einer Menge von 0,1 bis 5 Gew.-% vorhanden sind,

mit der Maßgabe, dass keine anderen Tenside außer den nichtionischen und/oder amphoteren Tensiden vorhanden sind, keine $C_1$-$C_3$-(Iso-)Alkohole vorliegen, wobei $C_1$-$C_3$-(Iso-)Alkohole Methanol, Ethanol, n-Propanol und Isopropanol darstellen, und die Verbindungen Chlorhexidindiglukonat, Sorbitancaprylat und Phenoxyethanol nicht enthalten sind.

In überraschender Weise wurde festgestellt, dass eine Kombination aus Zitronensäure, Milchsäure und/oder Bernsteinsäure, Benzoat(en) und wasserlöslichem(n) bzw. wasserdispergierbarem(n), nichtionischem(n) und/oder amphoterem(n) Tensid(en) zu einer deutlich gesteigerten desinfizierenden Wirkung führt, die insbesondere zur Verwendung in Händedesinfektionsmitteln, Lebensmitteldesinfektionsmitteln und Flächendesinfektionsmitteln vorteilhaft ist. Versuche haben gezeigt, dass nicht nur eine besonders hohe Wirksamkeit des Desinfektionsmittels erhalten wird, wenn diese Kombination vorliegt, sondern auch die Wirkung in unerwartet kurzer Zeit eintritt. Dies ist von großer Bedeutung, um möglichst rasch der Gefahr einer hohen Bakterienbelastung und gegebenenfalls auch hoher Virenbelastung vorzubeugen. So werden Keimreduktionen auf einen Keimgehalt, der unterhalb der Nachweisgrenze liegt, innerhalb von 30 s erreicht, die in gängigen Labortests EN 1650 / EN13624, EN 1275, EN 1276 / EN 13727 und EN 14476 als auch im Gebrauchstest nach EN 1500/EN 1499 nachgewiesen werden können.

Das Desinfektionsmittel kann in wässriger flüssiger Zusammensetzung oder als feste Zusammensetzung, insbesondere in Form eines Konzentrats vorliegen. Beispielsweise kann das Desinfektionsmittel eine Lösung, Emulsion, Lotion, Spray, Gel, Schaum oder einen Feststoff darstellen. Der Feststoff soll möglichst breit verstanden werden und umfasst, beispielsweise ein Pulver, Granulat und dergleichen, aber auch Feststoff-Flüssigkeits-Gemische mit einem hohen Anteil an Feststoff, beispielsweise mehr als 60 Gew.-%, mehr als 70 Gew.-% oder mehr als 75 Gew.-%, d.h. Feststoff-Flüssigkeits-Gemische die nicht fließfähig sind, wie eine Paste. Als feste Zusammensetzung wird bevorzugt ein Konzentrat verwendet, das wasserlöslich oder in Wasser emulgierbar oder dispergierbar ist. Das verwendete Wasser ist nicht weiter beschränkt und kann beispielsweise destilliertes Wasser, demineralisiertes Wasser, Trinkwasser oder Leitungswasser sein.

In der Regel wird das Desinfektionsmittel in fester Zusammensetzung als Konzentrat zur jeweiligen Anwendung mit Wasser verdünnt, um eine wässrige flüssige Zusammensetzung zu erhalten. Erfindungsgemäß liegen in der wässrigen flüssigen Zusammensetzung die ein oder mehreren nichtionischen Tenside in einer Menge von 1,1 bis 3 Gew.-% und/oder die ein oder mehreren amphoteren Tenside in einer Menge von 1,1 bis 24 Gew.-% vor. Diese Bereiche haben sich als besonders vorteilhaft für die Wirksamkeit des Desinfektionsmittels erwiesen.

Nachfolgend werden die einzelnen Komponenten des erfindungsgemäßen Desinfektionsmittels in Einzelheiten erläutert:

Im Desinfektionsmittel der vorliegenden Erfindung wird eine organische Säure, ausgewählt aus Zitronensäure, Milchsäure und/oder Bernsteinsäure eingesetzt:

Als organische Säure wird im erfindungsgemäßen Desinfektionsmittel beispielsweise Zitronensäure verwendet. Zitronensäure ist ein farbloser, geruchloser Feststoff, der sehr leicht in Wasser löslich ist. Es ist eine Tricarbonsäure, die an Position 3 des Kohlenstoffgerüsts eine Hydroxygruppe trägt und daher auch eine Hydroxycarbonsäure darstellt und zu den sog. Fruchtsäuren gehört. Zitronensäure und deren Salze werden beispielsweise zur Konservierung und als Säuerungsmittel oder Säureregulator von Lebensmitteln eingesetzt. Häufig wird diese auch in kalklösenden Reinigungsmitteln verwendet.

Als weitere oder alternative organische Säure kann im erfindungsgemäßen Desinfektionsmittel Milchsäure Verwendung finden. Milchsäure ist eine Hydroxycarbonsäure, die vollständig mit Wasser mischbar ist. Sie ist optisch aktiv und es kann je nach der Herstellung D- oder L-Milchsäure oder eine Mischung beider Isomere, beispielsweise ein Racemat (1:1-Gemisch beider Isomere), vorliegen. Milchsäure wird beispielsweise in der Kosmetik in Hautcremes und anderen Produkten zur Behandlung von Akne eingesetzt.

Eine zusätzliche oder alternativ einzusetzende organische Säure, die im erfindungsgemäßen Desinfektionsmittel verwendet werden kann, ist Bernsteinsäure. Bernsteinsäure ist eine aliphatische Dicarbonsäure, die in Form eines farb- und geruchlosen kristallinen Feststoffs vorliegt. Diese ist in Wasser löslich und findet beispielsweise als Lebensmittelzusatzstoff Verwendung.

Es kann auch eine Mischung von zwei oder allen drei organischen Säuren, ausgewählt aus Zitronen-, Milch- und Bernsteinsäure, eingesetzt werden.

Wenn das Desinfektionsmittel in Form einer festen Zusammensetzung, insbesondere als Konzentrat vorliegt, sind die eine oder mehreren organischen Säuren, je nach Anwendungsfall, bevorzugt in einer Menge vorhanden, die ausgewählt ist aus 5 - 85 Gew.-%, 10 - 85 Gew.-%, 15 - 80 Gew.-%, 20 - 85 Gew.-%, 25 - 85 Gew.-%, bevorzugt 30 - 85 Gew.-%.

Liegt das Desinfektionsmittel in Form einer wässrigen flüssigen Zusammensetzung vor, sind die eine oder mehreren organischen Säuren, je nach Anwendungsfall, bevorzugt in einer Menge vorhanden, die ausgewählt ist aus 0,1 bis 15 Gew.-% oder 0,15 bis 14 Gew.,-% oder 0,2 bis 13 Gew.-%, bevorzugt 0,5 bis 12 Gew.-%.

Eine weitere notwendige Komponente des erfindungsgemäßen Desinfektionsmittels ist ein Benzoat, ausgewählt aus Natriumbenzoat, Kaliumbenzoat oder Calciumbenzoat oder eine Mischung dieser.

Benzoesäure ist eine bekannte aromatische Carbonsäure, die aus einem Phenylrest mit einer Carboxygruppe aufgebaut ist. Die Salze der Benzoesäure werden Benzoate genannt. Benzoesäure ist ein farbloser Feststoff mit charakteristischem Geruch, der in Wasser schwer löslich ist (3,4 g/L bei 20°C). Demgegenüber sind die Salze in Wasser leicht löslich. Die Salze Natriumbenzoat (E 211), Kaliumbenzoat (E 212) oder Calciumbenzoat (E 213) werden als Konservierungsmittel verwendet. Aufgrund ihrer konservierenden Eigenschaften finden diese beispielsweise in der Lebensmittelindustrie und der Kosmetik Verwendung.

Es hat sich gezeigt, dass sich eine desinfizierende Wirkung von Benzoesäure insbesondere dann entfaltet, wenn diese vollständig in Lösung vorliegt. Aus diesem Grund werden die Salze der Benzoesäure eingesetzt, die in Wasser leicht löslich sind. Sie wirken als Konservierungsmittel deutlich langsamer und sind daher als desinfizierender Wirkstoff in Handdesinfektionsmittel bisher nicht in Erscheinung getreten.

Im Desinfektionsmittel in Form einer festen Zusammensetzung wird die Menge an Benzoat(en), je nach Anwendungsfall, bevorzugt ausgewählt aus 1,5 - 30 Gew.-%, 2,0 - 29 Gew.-%, 3,0 - 28 Gew.-% oder 4,0 - 27 Gew.-%, bevorzugt 5,0 - 26,0 Gew.-%.

Im Desinfektionsmittel in Form einer wässrigen flüssigen Zusammensetzung wird die Menge an Benzoat(en), je nach Anwendungsfall, bevorzugt ausgewählt aus 0,1 bis 5,0 Gew.-%, 0,15 bis 5,0 Gew.-% oder 0,2 bis 4,5 Gew.-%, bevorzugt 0,25 bis 3,5 Gew.-%.

Die dritte notwendige Komponente des erfindungsgemäßen Desinfektionsmittels stellt ein oder mehrere Tenside dar, bestehend aus ein oder mehreren nichtionischen Tensiden und/oder ein oder mehreren amphoteren Tensiden, umfassend auch eine Mischung von nichtionischen und amphoteren Tensiden, die jeweils in Wasser löslich oder emulgierbar oder dispergierbar sind. Die ein oder mehreren nichtionischen Tenside sind ausgewählt aus der Gruppe bestehend aus Fettalkoholalkoxylaten, Alkylpolyglucosiden oder Alkylpolyglycosiden (APGs), jeweils alleine oder Mischungen dieser. Die ein oder mehreren amphoteren Tenside sind ausgewählt aus der Gruppe bestehend aus Aminoxiden. Erfindungsgemäß können daher ein oder mehrere nichtionische Tenside vorliegen und ansonsten keine anderen Tenside. Alternativ können ein oder mehrere amphotere Tenside vorliegen und ansonsten keine anderen Tenside. Es kann auch eine Kombination von ein oder mehreren nichtionischen Tensiden und ein oder mehreren amphoteren Tensiden vorliegen und ansonsten keine anderen Tenside, wie beispielweise anionische Tenside oder kationische Tenside, vorliegen.

Unter "nichtionischen Tensiden" werden oberflächenaktive Substanzen verstanden, die keine dissoziierbaren funktionellen Gruppen aufweisen und daher in wässeriger Lösung keine Ionen bilden. Diese besitzen einen polaren und einen unpolaren Molekülteil, jedoch keine Ladung und sind damit neutral. Die in der vorliegenden Erfindung eingesetzten nichtionischen Tenside sind wasserlöslich. Unter "wasserlöslich" wird hier verstanden, dass die nichtionischen Tenside in Wasser derart löslich sind, dass eine klare Lösung entsteht. Es kann aber auch eine Emulsion entstehen, in der das nichtionische Tensid in stabiler Form in Wasser emulgiert bzw. dispergiert vorliegt, d.h. das nichtionische Tensid ist mit Wasser mischbar. Die Löslichkeit eines nichtionischen Tensids in Wasser kann anhand des HLB-Werts (Hydrophil-Lipophil-Balance) bestimmt werden. Der HLB-Wert gibt das Masse-Verhältnis zwischen dem polaren und dem unpolaren Teil in einem nichtionischen Tensid anhand der folgenden Formel an:

$$HLB = 20 * (M_{hydrophil}/M_{gesamt})$$

wobei $M_{hydrophil}$ die Molmasse des hydrophilen Anteils des nichtionischen Tensids ist und M die Molmasse des gesamten Moleküls darstellt. Der Faktor 20 ist ein Skalierungsfaktor. Ein HLB-Wert von 1 entspricht einer lipophilen Verbindung, eine chemische Verbindung mit einem HLB-Wert von 20 hat einen hohen hydrophilen Anteil. Der HLB-Wert des erfindungsgemäß eingesetzten nichtionischen Tensids beträgt bevorzugt $\geq 7$ und umfasst nicht nur klare Lösungen, sondern auch (stabile) Emulsionen. Der HLB-Wert des erfindungsgemäß eingesetzten nichtionischen Tensids kann auch $\geq 12$ oder $\geq 13$ betragen.

Die nichtionischen Tenside, die in Wasser löslich oder emulgierbar oder dispergierbar sind, weisen einen hohen HLB-Wert auf und haben daher den Vorteil, dass diese eine gute Benetzung von hydrophilen Oberflächen bewirken. Hierdurch kann eine verbesserte Desinfektionswirkung erwartet werden.

Alternativ zum HLB-Wert kann auch der Trübungspunkt des nichtionischen Tensids herangezogen werden. Ab einer bestimmten Temperatur sind nichtionische Tenside in Wasser nicht mehr löslich und bilden dann eine tensidreiche Phase, die durch eine Trübung der Lösung angezeigt wird. Diese Temperatur wird auch als "Trübungspunkt" bezeichnet und kann daher zur Charakterisierung wasserlöslicher nichtionischer Tenside eingesetzt werden. Dieser Trübungspunkt ist umso höher, je höher der HLB-Wert ist. Die erfindungsgemäß eingesetzten nichtionischen Tenside weisen daher bevorzugt einen Trübungspunkt von 40°C oder größer in Wasser auf.

Die nichtionischen Tenside sind ausgewählt aus Fettalkoholalkoxylaten, wie Polyalkylenglykolethern (Fettalkoholethoxylaten), Nonylphenolethoxylaten, Fettalkoholpropoxylaten, , Alkylpolyglucosiden oder Alkylpolyglykosiden, bevorzugt $C_8$-$C_{10}$-Alkylpolyglucosid oder -glycosidejeweils alleine oder Mischungen dieser.

Erfindungsgemäß bevorzugte Fettalkoholalkoxylate sind Polyalkylenglykolether, die auch als Fettalkoholpolyglykolether oder Fettalkoholethoxylate bezeichnet werden. Es sind nichtionische Tenside, deren lipophiler Teil aus Fettalkoholen, insbesondere von Laurinsäure, Palmitinsäure, Stearinsäure oder Ölsäure abgeleiteten Alkoholen, besteht und deren hydrophiler Teil aus kurzkettigen Polyethylenglykolen oder Polyoxyethylenen aufgebaut ist. Als beispielhafte bekannte Handelsnamen von Polyalkylenglykolethern seien genannt: Brij® , Genapol® und Lutensol® . Polyalkylenglykolether als nichtionische Tenside finden breite Verwendung in Körperpflegeprodukten.

Bevorzugt eingesetzte Polyalkylenglykolether sind Polyoxyethylenether von Laurylalkohol, wie Laureth-4, Laureth-6, Laureth-9 oder Laureth-23; Polyoxyethylenether von Cetylalkohol, wie Ceteth-10 oder Ceteth-20; Polyoxyethylenether von Cetylstearylalkohol, wie Ceteareth-20, Ceteareth-25; Polyoxyethylenether von Stearylalkohol, wie Steareth-10 oder Steareth-20; oder Polyoxyethylenether von Oleylalkohol, wie Oleth-10 oder Oleth-20), oder C9-11 Pareth 8 (ein Fettalkoholethoxylat mit 8 EO (Ethylenoxid-Einheiten), wie Genapol® UD 88).

Besonders bevorzugte Polyalkylenglykolether sind Polyoxyethylenether von Laurylalkohol, wie Laureth-4 (Fettalkoholethoxylate mit 4EO), Laureth-6 (Fettalkoholethoxylate mit 6EO), Laureth-9 (Fettalkoholethoxylate mit 9EO) oder Laureth-23 (Fettalkoholethoxylate mit 23EO) und/oder die nichtionischen Tenside der Genapol -Produktreihe (Polyalkylenglykolether).

Bevorzugte Alkylpolyglucoside oder Alkylpolyglycoside sind $C_8$-$C_{10}$-(Octyl- bis Decyl-)Polyglucoside bzw. -glycoside als auch Cocopolyglucoside bzw. -glycoside mit einer C-Kette bis $C_{16}$ / $C_{18}$.

Bevorzugte Tenside, die im erfindungsgemäßen Desinfektionsmittel eingesetzt werden, sind Alkylpolyglucoside oder Alkylpolyglycoside (APGs), die stets einen HLB-Wert von >10 besitzen, wie beispielsweise Plantacare® (z.B. Plantacare®810 UP: auf folgender Basis: $C_8$-$C_{10}$-Alkylpolyglucoside bzw. - glycoside). oder Sorbitanester, wie Sorbitanmonolaurat, das einen HLB-Wert von 8,6 hat. Diese finden in der Kosmetikindustrie, beispielweise als Bestandteile von Shampoos, Haarspülungen, Badezusätzen oder Hautreinigungsmitteln Verwendung.

Besonders bevorzugte Zuckertenside sind Alkylglucoside, wie Polysorbat, Alkylpolyglucoside oder Alkylpolyglycoside (APGs), beispielsweise Caprylyl-/Caprylglucoside oder -glycoside, wie Plantacare®, oder Sorbitanester, insbesondere Sorbitanmonolaurat, jeweils alleine oder Mischungen dieser.

Es kann vorteilhaft sein, wenn als nichtionisches Tensid kein Polysorbat, insbesondere kein Polysorbat 80, eingesetzt wird

Erfindungsgemäß besonders bevorzugte nichtionische Tenside sind daher Polyalkylenglykolether, ausgewählt aus der Gruppe, bestehend aus Polyoxyethylenethern von Laurylalkoholen, wie Laureth-4, Laureth-6, Laureth-9 oder Laureth-23, Polyoxyethylenethern von Cetylalkoholen, wie Ceteth-10 oder Ceteth-20, Polyoxyethylenethern von Cetylstearylalkoholen, wie Ceteareth-20, Ceteareth-25, Polyoxyethylenethern von Stearylalkoholen, wie Steareth-10 oder Steareth-20, oder Polyoxyethylenethern von Oleylalkoholen, wie Oleth-10 oder Oleth-20, Alkylpolyglucoside oder Alkylpolyglycoside (APGs), insbesondere $C_8$-$C_{10}$-Alkylpolyglucoside bzw. -glycoside, beispielweise Caprylyl-/Caprylglucoside oder -glycoside, wie Plantacare® (z.B. Plantacare®810 UP: auf folgender Basis: $C_8$-$C_{10}$-Alkylpolyglucoside bzw. -glycoside) oder C9-11 Pareth 8 (ein Polyalkylenglykolether, insbesondere ein Fettalkoholethoxylat mit 8EO; "Pareth-" bezeichnet einen PEG-Ether eines Alkanols (Alkylalkohols); die vorangestellten Zahlen "C x-y" geben die Länge der Alkyl-(Kohlenstoff-)Ketten an; die Zahl hinter "Pareth-" gibt die durchschnittliche Anzahl der Moleküleinheiten -$CH_2$-$CH_2$-O- an), wie Genapol® UD 88, oder Sorbitanester, wie Sorbitanmonolaurat, jeweils alleine oder Mischungen dieser.

Ganz besonders bevorzugte nichtionische Tenside sind die insbesondere klar wasserlöslichen, Polyoxyethylenether von Laurylalkoholen, $C_9$-$C_{11}$ Pareth-8, Alkylpolyglucoside oder -glycoside, insbesondere $C_8$-$C_{10}$-Alkylpolyglucoside oder -glycoside oder Sorbitanester.

Vorteilhaft an nichtionischen Tensiden ist, dass diese in der Regel für den Menschen gut verträglich und nicht reizend sind.

Zur Erläuterung sei darauf hingewiesen, dass "Glucoside" eigentlich organische Verbindungen sind, bei denen ein Alkohol über eine glycosidische Bindung an Glucose gebunden ist. "Glycoside" sind organische Verbindungen, bei denen ein Alkohol über eine glycosidische Bindung an einen Zuckergebunden ist. Glucoside stellen daher eine Untergruppe der Glycoside dar. Die Begriffe werden jedoch im Stand der Technik nicht einheitlich verwendet, da mit Glucosiden häufig auch die Glycoside bezeichnet werden. In der vorliegenden Erfindung sollen die Begriffe daher austauschbar verwendet werden, so dass ein Glucosid auch das Glycosid umfasst und umgekehrt.

Im Desinfektionsmittel in Form einer festen Zusammensetzung wird die Menge an den ein oder mehreren nichtionischen Tensiden, je nach Anwendungsfall, bevorzugt ausgewählt aus 1,5 - 25 Gew.-%, 2,0 - 24 Gew.-%, 5 - 23 Gew.-% oder 7,5 - 22 Gew.-%.

Liegt das Desinfektionsmittel in Form einer wässrigen flüssigen Zusammensetzung vor, so werden die ein oder mehreren nichtionischen Tenside, je nach Anwendungsfall, bevorzugt ausgewählt aus 1,1 - 3,0 Gew.-% oder 1,1 - 2,9 Gew.-% oder 1,1 bis 2,8 Gew.-% oder 1,1 bis 2,7 Gew.-% oder 1,1 bis 2,6 Gew.-% oder 1,1 bis 2,5 Gew.-% oder 1,1 bis 2,4 Gew.-% oder 1,1 bis 2,3 Gew.-% oder 1,1 bis 2,2 Gew.-% oder 1,1 bis 2,1 Gew.-% oder 1,1 bis 2,0 Gew.-% oder 1,1 bis 1,9 Gew.-% oder 1,1 bis 1,8 Gew.-% oder 1,1 bis 1,7 Gew.-% oder 1,1 bis 1,6 oder 1,1 bis 1,5 Gew.-%, wobei die Untergrenze in den angegeben Bereichen auch 1,15 Gew.- oder 1,2 Gew.-% oder 1,25 Gew.-% oder 1,3 Gew.-% oder 1,35 Gew.-% oder 1,4 Gew.-% betragen kann.

Anstelle oder zusätzlich zu den nichtionischen Tensiden können auch ein oder mehrere amphotere Tenside eingesetzt werden. "Amphotere" oder zwitterionische Tenside sind oberflächenaktive Substanzen, die sowohl eine negativ als auch eine positiv geladene funktionelle Gruppe enthalten. Es handelt sich um polare Verbindungen, die häufig Feststoffe darstellen, und sehr gut in Wasser löslich sind. Sie können nichtionischen Tensiden als Co-Tenside beigemischt werden oder allein zum Einsatz kommen. Amphotere Tenside werden zum Beispiel in Handspülmitteln, Shampoos und anderen Kosmetikprodukten verwendet.

Erfindungsgemäß werden die ein oder mehreren amphoteren Tenside ausgewählt aus der Gruppe bestehend aus Aminoxiden, insbesondere $C_{12}$-$C_{14}$-Aminoxiden. Ganz besonders bevorzugt sind $C_{12}$-$C_{14}$-Aminoxide, wie beispielweise das Handelsprodukt Ammonyx LO.

Einige amphotere Tenside zeigen abhängig vom pH-Wert eine Ladungsverschiebung. So weisen diese bei saurem pH-Wert eine Ladungsverschiebung in den positiven Bereich auf. Die Tenside verhalten sich dann ähnlich zu kationischen Tensiden. Bei einem alkalischen pH-Wert findet eine Ladungsverschiebung in den negativen Bereich statt, so dass sich die Tenside dann ähnlich zu anionischen Tensiden verhalten. Zur Klarstellung wird hier darauf hingewiesen, dass anionische Tenside und kationische Tenside, die generell im erfindungsgemäßen Desinfektionsmittel nicht vorliegen sollen, diejenigen Tenside bedeutet, die keine amphoteren Tenside sind, d.h. keine Ladungsverschiebung bei unterschiedlichem pH-Wert zeigen.

Gemäß einer Ausführungsform können im Desinfektionsmittel daher auch nur nichtionische Tenside und keine anderen Tenside, insbesondere keine amphoteren, kationischen oder anionischen Tenside enthalten sein.

Gemäß einer weiteren Ausführungsform können im Desinfektionsmittel nichtionische Tenside und/oder Aminoxid enthalten sein und kein weiteres Tensid, insbesondere kein weiteres amphoteres Tensid und auch kein kationisches oder anionisches Tensid.

Gemäß einer weiteren Ausführungsform ist nur ein Aminoxid und kein weiteres amphoteres Tensid und insbesondere auch kein nichtionisches, kationisches oder anionisches Tensid im Desinfektionsmittel enthalten.

Im Desinfektionsmittel in Form einer festen Zusammensetzung liegt die Menge an den ein oder mehreren amphoteren Tensiden, je nach Anwendungsfall, bevorzugt im Bereich von 1,5 - 25 Gew.-%, 2,0 - 24 Gew.-%, 5 - 23 Gew.-% oder 7,5 - 22 Gew.-%.

Wenn das Desinfektionsmittel in Form einer wässrigen flüssigen Zusammensetzung vorliegt, so beträgt die Menge der ein oder mehreren amphoteren Tenside, je nach Anwendungsfall, bevorzugt 1,1 Gew.-%, 1,5 Gew.-%, 2,0 - 24 Gew.-%, 5 - 23 Gew.-% oder 7,5 - 22 Gew.-%.

Es wurde nun festgestellt, dass die Kombination aus der ausgewählten organischen Säure(n)/Benzoat(en)/nichtionischem(n) und/oder amphoterem(n) Tensid(en) ein breites antibakterielles Wirkungsspektrum bietet. Insbesondere wird eine hohe Wirksamkeit gegen gram-positive und gram-negative Bakterien beobachtet. Die Gram-Färbung dient zur differenzierenden Färbung von Bakterien für die mikroskopische Untersuchung. Je nach Aufbau der Zellwand können die Bakterien in zwei Gruppen eingeteilt werden: Gram-positive Bakterien färben sich in einer entsprechenden Färbereaktion unter dem Mikroskop blau und umfassen beispielsweise Bakterienstämme, wie Staphylococcus aureus, Pseudomonas aeruginosa, Streptococcus pneumoniae und aerobe Sporenbildner, wie beispielweise Bacillus. Gram-negative Bakterien färben sich unter dem Mikroskop rot und umfassen beispielsweise Bakterienstämme, wie Escherichia coli, Helicobacter pylori, Enterobacter gergoviae und Spirillium volutans.

Eine überragende Wirksamkeit des Desinfektionsmittels wurde insbesondere gegen die typischen Umwelt-Bakterien *Escherichia coli, Pseudomonas aeruginosa, Staphylococcus aureus und/oder Pluralibacter gergoviae beobachtet.*

Anwendungsversuche bestätigen, dass das Desinfektionsmittel neben der bakteriziden und viruziden Wirkung auch gegen Pilze und Hefepilze wirkt. Ein Hefepilz ist beispielweise Candida albicans, bekannte Schimmelpilze sind beispielweise Aspergillus braseliensis.

Die erfindungsgemäße Desinfektionsmittel-Zusammensetzung zeichnet sich insbesondere durch seine bakterizide, fungizide (levurizide) und viruzide Wirkung aus.

Gemäß einem Aspekt der vorliegenden Erfindung wird von einer synergistischen Wirkung der Kombination aus Zitronensäure, Milchsäure und/oder Bernsteinsäure/Benzoat(en)/ nichtionischen und/oder amphoteren Tensid(en) ausgegangen. Bei einer Kombination von Komponenten liegt dann eine synergistische Wirkung vor, wenn sich die Kombinationswirkung nicht in der Summe der Einzelwirkungen erschöpft, sondern die Gesamtwirkung im Hinblick auf die Desinfektion über die Wirkung der einzelnen Komponenten hinausgeht. Dies kann durch den Vergleich und die Gegenüberstellung der Wirkungen der Komponenten erfolgen und belegt werden. Beispielsweise ist die Wirkung dann als synergistisch anzusehen, wenn die Gesamtwirkung von drei Komponenten der Wirkung, die mit einer Komponente allein erreicht werden kann, überlegen ist.

Versuche haben nun gezeigt, dass die organische Säure, ausgewählt aus Zitronensäure, Milchsäure und/oder Bernsteinsäure, zusammen mit einem oder mehreren Benzoaten und einem oder mehreren nichtionischen und/oder amphoteren Tensiden eine synergistische Desinfektionswirkung zeigt. Dies ist umso überraschender, da Benzoate (Konservierungsmittel) und Tenside mikrobiologisch gesehen eine langsame Aktivität bei pH Werten < 5 besitzen. Durch die erfindungsgemäße DesinfektionsZusammensetzung resultiert eine deutlich schnellere desinfizierende Wirkung, die sich in einer außerordentlich schnellen Einwirkzeit des Desinfektionsmittels zeigt. Die durchgeführten Versuche belegen, dass eine Einwirkzeit von 30 s bereits ausreichend ist, damit das Desinfektionsmittel seine desinfizierende Wirkung vollständig entfalten kann. Dies stellt eine unerwartet schnelle Einwirkzeit dar. Gleichzeitig wird in dieser sehr kurzen Einwirkzeit die Keimbelastung in extremem Maße abgesenkt, so dass die vorhandenen Bakterien, Pilze, Hefen, und gegebenenfalls auch Viren nahezu vollständig abgetötet werden. Zudem wird auch eine lang anhaltende Wirksamkeit erhalten. Die Verfahren zur Bestimmung der quantitativen Keimbelastungen und Einwirkzeiten für das erfindungsgemäße Desinfektionsmittel sind bei den Versuchen im Einzelnen beschrieben.

Ferner hat es sich als zweckmäßig und besonders vorteilhaft herausgestellt, wenn außer den nichtionischen und/oder amphoteren Tensiden, keine weiteren Tenside vorhanden sind. Insbesondere liegen im Desinfektionsmittel der Erfindung keine anionischen, und keine kationischen Tenside vor.

Als Lösungsmittel für das Desinfektionsmittel wird Wasser eingesetzt. Wenn das Desinfektionsmittel im kosmetischen Bereich eingesetzt wird, beispielsweise zur Handdesinfektion, wird für die Herstellung des kosmetischen Produkts bevorzugt gereinigtes, keimfrei gemachtes Wasser verwendet. Dieses kann destilliertes Wasser oder durch Ionenaustauscher oder Umkehr-Osmose demineralisiertes und damit keimfreies Wasser sein. Es kann auch Trinkwasser oder für bestimmte Annwendungen auch Leitungswasser verwendet werden.

Das Desinfektionsmittel der vorliegenden Erfindung kann - wie bereits erläutert - zum Beispiel in Form einer Lösung, Emulsion, Spray, Lotion, Gel oder Schaum oder in Form eines Feststoffs vorliegen. Beispielsweise liegt das erfindungsgemäße Desinfektionsmittel als wasserhaltige, flüssige Formulierung vor. Alkohol oder Alkoholgemische werden im erfindungsgemäßen Desinfektionsmittel als Lösungsmittel bevorzugt nicht eingesetzt. Bevorzugt wird im Desinfektionsmittel daher kein Alkohol, insbesondere keines der folgenden Lösungsmittel eingesetzt: Ethanol, Methanol, Isopropanol oder n-Propanol. Das erfindungsgemäße Desinfektionsmittel weist bevorzugt nur Wasser als Lösungsmittel auf.

Das erfindungsgemäße Desinfektionsmittel kann auch als Konzentrat in fester Form vorliegen und erst im Verwendungsfall in Wasser gelöst werden. Das Konzentrat wird dann in Wasser verdünnt und es wird eine geeignete Verdünnung für den Anwendungsfall hergestellt. Beispielhafte Verdünnungen sind 3,68%ige bis 50%ige Lösungen. Andere Verdünnungen sind ebenfalls möglich. Generell wird die Verdünnung so gewählt, dass das Desinfektionsmittel in der wässrigen flüssigen Zusammensetzung einen Gehalt an nichtionischem(n) Tensid(en) im Bereich von 1,1 bis 3,0 Gew.-% aufweist und/oder einen Gehalt an amphoterem(n) Tensid(en) im Bereich von 1,1 bis 24 Gew.-% aufweist. Die Wirksamkeit des flüssigen Desinfektionsmittels ist dadurch besonders hoch.

Gemäß einer Ausführungsform der Erfindung kann das Desinfektionsmittel der Erfindung zusätzlich ein Ingwer-Mazerat enthalten, das zu einer weiteren Steigerung der Desinfektionsleistung führen kann. Ingwer-Mazerate sind Wasserauszüge, insbesondere Kaltwasserauszüge, von Ingwer, um dessen Inhaltsstoffe zu lösen. Das Mazerat wird bevorzugt in einer Menge von 0 - 2 Gew.-% besonders bevorzugt sind 0 - 0,5 Gew.-% im erfindungsgemäßen Desinfektionsmittel eingesetzt. Die Menge hängt von der beabsichtigten Anwendung ab. Insbesondere die Inhaltsstoffe 6-Gingerole und Shogaole des Ingwers zeigen eine antimikrobielle Wirksamkeit, die beispielweise von Ruchi Badoni Semwal, Deepak Kumar Semwal, Sandra Combrinck und Alvaro M. Viljoen in Phytochemistry, Bd. 117, September 2015, S. 554-568 beschrieben wurde.

Anstelle eines Ingwer-Mazerats könnten auch die Inhaltsstoffe von Ingwer in Form von Gingerolen und Shogaolen, bevorzugt 6-Gingerol, in geeigneter Menge zum Desinfektionsmittel zugesetzt werden.

Gemäß eines weiteren Aspekts der Erfindung kann das erfindungsgemäße Desinfektionsmittel übliche Zusatzstoffe enthalten, welche dem Fachmann auf dem vorliegenden Fachgebiet bekannt sind. Beispiele hierfür sind, ohne jedoch auf diese beschränkt zu sein: Duftstoffe, wie ein oder mehrere etherische Öle, bevorzugt ausgewählt aus der Gruppe Lavendelöl und/oder Pefferminzöle, und/oder ein oder mehrere Solubilisierungsmittel, beispielsweise zur Solubilisierung des/der etherischen Öls/Öle, wie beispielsweise Polyglyceryl-10-laurat. Die Zusatzstoffe können zu einer höheren Wirksamkeit des Desinfektionsmittels beitragen.

Die vorstehend beispielhaft angeführten Zusatzstoffe kann der Fachmann vor dem Hintergrund der Kombination der Bestandteile organische Säure(n)/Benzoat(e)/ nichtionische(s) und/oder amphotere(s) Tensid(e) des Desinfektionsmittels im Hinblick auf eine komplette Kompatibilität mit diesen auswählen und in entsprechenden, ausreichenden Mengen zusetzen, soweit gewünscht. Beispielsweise werden die ein oder mehreren etherischen Öle in einer Menge von 0 - 2 Gew.-%, bevorzugt einer Menge von 0 - 0,1 Gew.-% eingesetzt. Wenn ein oder mehrere Solubilisierungsmittel zum Einsatz kommen, so werden diese beispielsweise in einer Menge von 0 - 10 Gew.-% verwendet.

Weiterhin werden bei Vorliegen von einem oder mehreren nichtionischen tensiden auch ein oder mehrere Mittel zur Feuchtigkeitsregulierung der Haut, die auch als ,Moisturizer' bezeichnet werden, eingesetzt. Dies sind beispielsweise Glykole mit 2 bis 10 Kohlenstoffen, wie Butylenglykol, Hexylenglykol, Caprylylglykol (1,2-Octandiol) (Handelsname Dermosoft® Octiol), Capricglykol oder 1,2 Hexandiol (Handelsname Hydrolite 6) sowie Glycin oder Glycerin. Die ein oder mehreren Mittel zur Feuchtigkeitsregulierung werden im Bereich von 0,1 bis 5 Gew.-% eingesetzt. Besonders bevorzugt kommen Glykole mit 2 bis 10 Kohlenstoffen, wie Butylenglykol, Hexylenglykol, Caprylylglykol (1,2-Octandiol) (Handelsname Dermosoft® Octiol), Capricglykol oder 1,2 Hexandiol (Handelsname Hydrolite 6) zum Einsatz. Gemäß einer Ausführungsform kann es bevorzugt sein, wenn die Menge jedes eingesetzten Glykols in der flüssigen Zusammensetzung jeweils im Bereich von 0,1 bis 2,0 Gew.-% liegt, insbesondere im Bereich von 0,5 bis 1,5 Gew.-% vorhanden ist. Wenn beispielsweise als Mittel zur Feuchtigkeitsregulierung Hexylenglykol und Caprylylglykol im flüssigen Desinfektionsmittel vorliegt, so kann es bevorzugt sein, wenn das Hexylenglykol im Bereich von 0,1 bis 2,0 Gew.-% liegt, insbesondere im Bereich 0,5 bis 1,5 Gew.-% vorhanden ist und das Caprylylglykol ebenfalls im Bereich von 0,1 bis 2,0 Gew.-% liegt, insbesondere im Bereich 0,5 bis 1,5 Gew.-% vorliegt.

Es wurde gefunden, dass Mittel zur Feuchtigkeitsregulierung der Haut zusätzlich die desinfizierende Wirkung deutlich unterstützen können. Insbesondere wenn fungizide Keime, wie Candida albicans und Aspergillus brasiliensis, vorliegen, wurde festgestellt, dass die Wirksamkeit des erfindungsgemä-βen Desinfektionsmittels durch das Vorliegen eines oder mehrerer die Feuchtigkeit regulierenden Mitteln deutlich verbessert werden kann.

Gemäß einer bevorzugten Ausführungsform sind im erfindungsgemäßen Desinfektionsmittel bei Vorliegen von einem oder mehreren nichtionischen Tensiden daher gleichzeitig ein oder mehrere Mittel zur Feuchtigkeitsregulierung vorhanden. Dies führt zu einer vorteilhaften Steigerung der Wirksamkeit des Desinfektionsmittels.

Wenn nur ein oder mehrere amphotere Tenside als Tenside im Desinfektionsmittel enthalten sind, können die Mittel zur Feuchtigkeitsregulierung auch weggelassen werden.

Bevorzugt liegt außer den Wirksubstanzen organische Säure(n), Benzoat(en) und nichtionische(n) und/oder amphotere(n) Tensid(en) keine weitere Wirksubstanz vor, sondern nur Hilfs- bzw. Zusatzstoffe, bevorzugt umfassend oder bestehend aus ein oder mehreren Duftstoffen, ein oder mehrere Solubilisierungsmittel, ein oder mehreren einwertigen Salzen und ein oder mehreren Mitteln zur Feuchtigkeitsregulierung der Haut.

Das erfindungsgemäße Desinfektionsmittel, das in fester Zusammensetzung vorliegt, umfasst oder besteht bevorzugt aus:

5 - 85 Gew.-%, 10 - 85 Gew.-%, 15 - 85 Gew.-%, 20 - 85 Gew.-%, 25 - 85 Gew.-% oder 30 - 85 Gew.-% organische Säure(n);
1,5 - 30 Gew.-%, 2,0 - 29 Gew.-%, 3,0 - 28 Gew.-%, 4,0 - 27 Gew.-% oder 5,0 - 26,0 Gew.-% Benzoat(e);
1,5 - 25 Gew.-%, 2,0 - 24 Gew.-%, 5 - 23 Gew.-% oder 7,5 - 22 Gew.-% nichtionische(s) Tensid(e) und/oder 1,5 - 25 Gew.-%, 2,0 - 24 Gew.-%, 5 - 23 Gew.-% oder 7,5 - 22 Gew.-% amphotere(s) Tensid(e);
0 bis 2,0 Gew.-% Ingwer-Mazerat oder 6-Gingerol;
0,1 bis 5,0 Gew.-% ein oder mehrere Mittel zur Feuchtigkeitsregulierung;
0 bis 2,0 Gew.-% ein oder mehrere Duftstoffe;
0 bis 25,0 Gew.-% ein oder mehrere einwertige Salze, insbesondere ausgewählt aus NaCl, KCl und/oder LiCl und
0 bis 10 Gew.-% Solubilisierungsmittel.

Gemäß einer Ausführungsform wird ein flüssiges Desinfektionsmittel bereitgestellt, umfassend oder bestehend aus:

0,1 bis 15 Gew.-%, bevorzugt 0,5 bis 12 Gew.-% organische Säure(n);
0,1 bis 5,0 Gew.-%, 0,15 bis 5,0 Gew.-% oder 0,2 bis 4,5 Gew.-%, bevorzugt 0,25 bis 3,5 Gew.-% Benzoat(e);
1,1 - 3,0 Gew.-% oder 1,1 - 2,9 Gew.-% oder 1,1 bis 2,8 Gew.-% oder 1,1 bis 2,7 Gew.-% oder 1,1 bis 2,6 Gew.-% oder 1,1 bis 2,5 Gew.-% oder 1,1 bis 2,4 Gew.-% oder 1,1 bis 2,3 Gew.-% oder 1,1 bis 2,2 Gew.-% oder 1,1 bis 2,1 Gew.-% oder 1,1 bis 2,0 Gew.-% oder 1,1 bis 1,9 Gew.-% oder 1,1 bis 1,8 Gew.-% oder 1,1 bis 1,7 Gew.-% oder 1,1 bis 1,6 oder 1,1 bis 1,5 Gew.-%, wobei die Untergrenze in den angegeben Bereichen auch 1,15 Gew.- oder 1,2 Gew.-% oder 1,25 Gew.-% oder 1,3 Gew.-% oder 1,35 Gew.-% oder 1,4 Gew.-% betragen kann, nichtionische(s) Tensid(e) und/oder 1,1 - 24 Gew.-% oder 1,1 Gew.-%, 1,5 Gew.-%, 2,0 - 24 Gew.-%, 5 - 23 Gew.-% oder 7,5 - 22 Gew.-% amphotere(s) Tensid(e);
0,1 bis 5,0 Gew.-% ein oder mehrere Mittel zur Feuchtigkeitsregulierung, insbesondere ausgewählt aus Glykolen mit 2 bis 10 Kohlenstoffen, wie Butylenglykol, Hexylenglykol, Caprylylglykol, Capricglykol, 1,2-Hexandiol sowie Glycin oder Glycerin, und Mischungen dieser;
0 bis 2,0 Gew.-% ein oder mehrere Duftstoffe, insbesondere ausgewählt aus Lavendelöl und/oder Pfefferminzöl;
0 bis 25,0 Gew.-%, bevorzugt 0,5 - 5 Gew.-% ein oder mehrere einwertige Salze, insbesondere ausgewählt aus NaCl, KCl und/oder LiCl;
0 bis 10 Gew.-% Solubilisierungsmittel;
und
67,0 bis 98,7 Gew.-% Wasser.

Selbstverständlich werden die Mengen der Komponenten im Desinfektionsmittel jeweils so gewählt, dass insgesamt 100 Gew.-% resultieren.

Das erfindungsgemäße Desinfektionsmittel hat einen sauren pH-Wert im Bereich von 1,5 - 4,2, besonders bevorzugt ist der pH Bereich zwischen 2,0 - 3,5. Damit liegt das Benzoat zum überwiegenden Teil als gelöste Benzoesäure (pKs 4,2) vor, was die eigentlich wirksame Komponente darstellt.

Gegenstand der Erfindung ist weiterhin die Verwendung des Desinfektionsmittels bei der Hände-, Lebensmittel- und Flächendesinfektion, d.h. das Desinfektionsmittel der vorliegenden Erfindung eignet sich als Hände-, Lebensmittel- und Flächendesinfektionsmittel, wobei insbesondere eine Einwirkzeit des Desinfektionsmittels von 30 s ausreichend ist, um seine vollständige desinfizierende Wirkung zu zeigen. Insbesondere erfolgt die Verwendung des Desinfektionsmittels gegen *Escherichia coli, Pseudomonas aeruginosa, Staphylococcus aureus, Candida albicans und/oder Pluralibacter gergoviae,* wobei nach einer Einwirkzeit des Desinfektionsmittels von 30 s die Keimbelastung unter die Nachweisgrenze reduziert wird. Die therapeutische Verwendung ist generell ausgenommen.

Neben der klassischen Verwendung als Desinfektionsmittel im öffentlichen und/oder privaten Bereich kann dieses auch bei in situ-Produktionsentkeimungsverfahren zum Einsatz kommen. Dies ist die Anwendung in Herstellungsverfahren, in denen Rohstoffe zum Einsatz kommen, die für die Verarbeitung oder Weiterverarbeitung entkeimt werden müssen. Dies spielt überall dort eine Rolle, wo es von Bedeutung ist, dass keimfrei oder möglichst keimfrei gearbeitet werden soll.

Besonders interessant ist das Desinfektionsmittel daher auch zur Anwendung in der kosmetischen Herstellung, wo auf den Einsatz von keimarmen Rohstoffen besonders Wert gelegt wird. Durch den Einsatz des erfindungsgemäßen Desinfektionsmittels können daher zusätzlich zu der vorhandenen desinfizierenden Wirkung von Händen und Flächen auch im in-situ-Verfahren problematische, verkeimte Rohstoffe entkeimt werden. Dies können beispielsweise Reibekörper oder Abrasivstoffe in Form von natürlichen unbehandelten Keimmehlen, wie Olivenkernmehl, Aprikosenkernmehl, Walnussschalenmehl, Maismehl und dergleichen sein. Die Rohstoffe können direkt im Herstellungsverfahren entkeimt werden, ohne dafür ein aufwendiges Bestrahlungsverfahren (Gamma-Strahlung) oder ein Wärmeverfahren (bei > 70°C) einsetzen zu müssen. Vorgeschaltete komplexe Entkeimungsverfahren von Rohstoffen können daher entfallen. Das erfindungsgemäße Desinfektionsmittel hat zudem den großen Vorteil, dass sehr schnell, beispielsweise innerhalb von 30s eine nahezu vollständige Entkeimung erfolgt. Dies bedeutet wirtschaftlich als auch ökologisch außerordentliche Vorteile bei einem in situ-Produktionsentkeimungsverfahren.

Die Vorteile des erfindungsgemäßen Desinfektionsmittels sind außerordentlich vielschichtig:
So werden Komponenten für das Desinfektionsmittel verwendet, die bereits als Einzelkomponenten im Lebensmittelsektor oder der kosmetischen Industrie Verwendung finden und daher toxisch unbedenklich sind. Zum Teil sind die Komponenten für Ihre hautschonenden Eigenschaften bekannt. Zudem zeichnen sich diese durch ihre Haut- und Umweltverträglichkeit aus.

Obwohl keine starken Oxidationsmittel verwendet werden, stellt das Desinfektionsmittel eine überragende bakterizide Wirksamkeit insbesondere gegen gram-positive als auch gram-negative Bakterien, Pilze und auch Viren zur Verfügung und tötet diese in hohem Maße ab. Dies wird auf eine synergistische Wirkung der drei Komponenten organische Säure/Benzoat/nichtionisches und/oder amphoteres Tensid zurückgeführt.

Hierdurch resultiert eine in Versuchen belegte außerordentlich schnelle desinfizierende Wirkung, die sich in einer Einwirkzeit von maximal 30 s zeigt. Besonders überraschend ist, dass die Keimtötungsgeschwindigkeit durch die Verwendung von Benzoat(en) erhöht und durch den Zusatz von nichtionischem(n) und/oder amphoterem(n) Tensid(en) in unerwartet hohem Maße gesteigert werden kann. Hierdurch kann die Einsatzmenge der organischen Säure(n) deutlich reduziert werden. Gleichzeitig wird in dieser sehr kurzen Einwirkzeit die Keimbelastung deutlich reduziert. Versuche bestätigen, dass das erfindungsgemäße Desinfektionsmittel gegen *Escherichia coli, Pseudomonas aeruginosa, Staphylococcus aureus und/oder Pluralibacter gergoviae* eine überragende Wirkung zeigt, wobei nach einer Einwirkzeit des Desinfektionsmittels von nur 30 s die Keimbelastung bzw. der Keimgehalt unter die Nachweisgrenze reduziert wird. Weitere Versuche bestätigen, dass das erfindungsgemäße Desinfektionsmittels auch gegen Pilze, insbesondere Candida albicans und/oder Aspergillus brasiliensis, eine überragende Wirkung zeigt, wobei nach einer Einwirkzeit des Desinfektionsmittels von nur 30 s die Keimbelastung bzw. der Keimgehalt unter die Nachweisgrenze reduziert wird. Zudem wird auch eine lang anhaltende Wirksamkeit beobachtet.

Das Desinfektionsmittel der vorliegenden Erfindung kann in unterschiedlichen Formen, zum Beispiel als Lösung, Emulsion, Spray, Lotion, Gel oder Schaum oder auch als festes wasserlösliches Konzentrat bereitgestellt werden. Als Lösungsmittel dient Wasser; $C_1$-$C_3$-(Iso-)Alkohole werden als Lösungsmittel nicht eingesetzt.

Gemäß einer Ausführungsform der Erfindung kann das Desinfektionsmittel zusätzlich ein Ingwer-Mazerat enthalten, das zu einer weiteren Steigerung der Desinfektionsleistung führen kann.

Das Desinfektionsmittel kann in wässriger flüssiger Zusammensetzung oder als feste Zusammensetzung, insbesondere in Form eines Konzentrats vorliegen. Das Konzentrat kann zur jeweiligen Anwendung mit Wasser verdünnt werden, um eine wässrige flüssige Zusammensetzung zu erhalten.

Der optionale Einsatz von Zusatzstoffen, insbesondere Duftstoffen, wie ätherischem Öl/ätherischen Ölen, bevorzugt ausgewählt aus Lavendelöl und/oder Pefferminzöl, Solubilisierungsmitteln oder Mitteln zur Feuchtigkeitsregulierung, kann zu einer Steigerung der Wirksamkeit des Desinfektionsmittels führen. Insbesondere kann die Verwendung von Mitteln zur Feuchtigkeitsregulierung eine signifikante Verbesserung der Wirksamkeit zeigen. Eine bevorzugte Verwendung von nichtionischem(n) Tensid(en) und einem oder mehreren Mitteln zur Feuchtigkeitsregulierung zeigte sich als besonders vorteilhaft.

Neben der klassischen Verwendung im öffentlichen und/oder privaten Bereich kann das Desinfektionsmittel auch bei in situ-Produktionsentkeimungsverfahren eingesetzt werden, um Rohstoffe vor der Verarbeitung zu entkeimen. Dies spielt insbesondere in der kosmetischen Industrie eine große Rolle. Die Rohstoffe können dann in einem vorgeschalteten Schritt direkt im Herstellungsverfahren entkeimt werden, ohne dafür ein aufwendiges Bestrahlungsverfahren (Gamma-Strahlung) oder ein Wärmeverfahren (bei > 70°C) einsetzen zu müssen. Dabei wirkt sich die kurze Einwirkzeit von 30 s des erfindungsgemäßen Desinfektionsmittels sehr vorteilhaft aus. Dies bedeutet in wirtschaftlicher als auch ökologischer Hinsicht außerordentliche große Vorteile.

Das Desinfektionsmittel der vorliegenden Erfindung kann täglich mehrfach verwendet werden. Für die Methode zur Desinfektion kann jedes allgemein gebräuchliche Verfahren der EN 1275, der EN 1276/EN1650, aber auch die Anwendungstests EN 1500/1499 zur Anwendung kommen.

Das Desinfektionsmittel der vorliegenden Erfindung zeichnet sich demnach durch eine hohe bakterizide, fungizide (levurizide) und viruzide Wirkung aus. Das Desinfektionsmittel stellt ein sehr schnell wirkendes Hände-, Lebensmittel- und Flächendesinfektionsmittel dar.

Nachfolgend wird die vorliegende Erfindung anhand von Versuchen näher erläutert, ohne diese hierauf zu beschränken.

## Versuche zur Entkeimung in kosmetischen Formulierungen

In den nachfolgend beschriebenen Versuchen wurden folgende Gerätschaften verwendet:

**Prüfmittel:**

Es wird ein Brutschrank BF 720 verwendet.

Als Ausplattierungsgerät wird ein Spiralplater verwendet, mit dem ein vordefiniertes Volumen der auf die Keime zu prüfenden Suspension auf das Nährmedium aufgebracht wird. Beispielweise wird ein EddyJet 2W-Spiralplater verwendet.

Zu den Keimgehaltsbestimmungen wird ein manuelles Kolonienzählgerät eingesetzt.

**Materialien:**

Sabouraud-Agar-Platten
Caso-Agar-Platten
Eddy-Jet-Einmalspritzen
Eddy-Jet-Probenbecher

Die Keimzählung erfolgt im Screening mittels Envirocheck®-System zur Bestätigung nach dem Ph Eur.6.8 Kap. 2.6.12.

**Allgemeines Vorgehen:**

**Abimpfung:**

- Das Abimpfen erfolgt mittels Spiralplater mit entsprechendem Programm, je nach Anforderung (z.B. können in einem Programm durch den Gradienten des aufgetragenen Produkts höhere Keimzahlen besser aufgeschlüsselt werden oder in einem anderen Programm kann eine größere Menge aufgetragen werden, wodurch die untere Bestimmungsgrenze absinkt).
- Für jede Probe werden jeweils ein (bei Doppelproben zwei) Pilz- und ein Bakteriennährboden genommen.
- Standard-Gesamtkeimzahlprüfungen werden ohne Doppelbestimmung durchgeführt.

**Neutralisierung:**

Falls eine Neutralisierung vorzunehmen ist, erfolgt diese mit 50%iger NaOH.

**Bebrütung:**

Bakterien: 2-3 Tage bei 30 +/- 2°C in den entsprechenden Brutschränken;
Hefe/Pilze: 3-5 Tage bei Raumtemperatur unter Lichtausschluss.

**Bewertung:**

Erfolgt anhand der ermittelten Keimgehaltsbestimmungen.

**Messunsicherheit:**

Die Hauptunsicherheit der quantitativen Keimgehaltsbestimmung ist die Probenauftragsmenge (ca. 5 % RSD, relative standard deviation). Die Auswertung ist zwischen 10 und 1000 KBE/Platte linear und hat eine Messunsicherheit (MU) von < 0,1 log-Stufen. Die Gesamtmessunsicherheit beträgt somit in etwa 0,15 log-Stufen.

- Eine Zählung von 100 KBE auf einer Platte entspricht 1000 KBE/mL und somit maximal zwischen 790 und 1260 KBE/mL.

**1. Bestimmung einer Keimgrundlage**

In mehreren Vorversuchen wurde eine Substanz als Keimgrundlage ermittelt, die besonders gut dazu geeignet ist, eine Verkeimung zu untersuchen. Insbesondere geeignet sind hierfür Reibekörper oder Abrasivstoffe in Form von natürlichen unbehandelten Keimmehlen, wie Olivenkernmehl, Aprikosenkernmehl, Walnussschalenmehl, Maismehl. Als besonders geeignet haben sich Walnussschalenmehl und Maismehl als Keimgrundlage herausgestellt, die daher in den folgenden Versuchen jeweils zum Einsatz kommen.

**2. Bestimmung der Anfangsverkeimung von Walnussschalenmehl und Maismehl**

In Versuchen wurde die Anfangsverkeimung von Walnussschalenmehl und Maismehl als Feststoff bzw. als wässrige Aufschlämmung untersucht. Zur Keimzahlbestimmung wurde das Testverfahren aus dem Europäischen Arzneibuch (Pharmacopoea Europaea oder European Pharmacopoeia, Ph.Eur.) 6.8 - Keimgehalt, Kapitel 2.6.12., herangezogen. In dem Versuch werden jeweils 5 Proben von unterschiedlichen Chargen genommen und untersucht. Die Ergebnisse für die Keimgehaltsbestimmungen in unbehandeltem Walnussschalenmehl als Feststoff oder als wässerige Aufschlämmung von Walnussschalenmehl sind in der nachfolgende Tabelle 1 und 2 zusammengefasst:

Tabelle 1: Keimgehaltsbestimmungen von unbehandeltem Walnussschalenmehl als Feststoff

| Bezeichnung | VF | Bakterien | Hefen | Pilze | GKZ |
|---|---|---|---|---|---|
| P268-001 | 1 | 540 | - | n.z. | 540 + n.z. |
| P268-002 | 1 | 380 | - | n.z. | 380 + n.z. |
| P268-003 | 1 | 345 | - | n.z. | 345 + n.z. |
| P268-004 | 1 | 500 | - | n.z. | 500 + n.z. |
| P268-005 | 1 | 285 | - | n.z. | 285 + n.z. |
| VF.......Verdünnungsfaktor<br>n.z.......nicht zählbar<br>GKZ.....Gesamtkeimzahl<br>-......... bei den Hefen < 7 KBE/g oder mL | | | | | |

Die Keimzahlen entsprechen KBE/g oder ml (Koloniebildende Einheiten), bezogen auf das unverdünnte Originalprodukt, d.h. je nach Verdünnung muss mit dem Verdünnungsfaktor multipliziert werden.

Tabelle 2: Keimgehaltsbestimmungen einer wässrigen Aufschlämmung von unbehandeltem Walnussschalenmehl (Verdünnungsfaktor 1:10)

| Bezeichnung | VF | Bakterien | Hefen | Pilze | GKZ |
|---|---|---|---|---|---|
| P268-001 | 10 | 12500 | - | 5000 | 17500 |
| P268-002 | 10 | 16000 | - | 1300 | 17300 |
| P268-003 | 10 | 10000 | - | 1700 | 11700 |
| P268-004 | 10 | 11000 | - | 2100 | 13100 |

# EP 4 326 068 B1

(fortgesetzt)

| Bezeichnung | VF | Bakterien | Hefen | Pilze | GKZ |
|---|---|---|---|---|---|
| P268-005 | 10 | 8800 | - | 980 | 9780 |

VF ....... Verdünnungsfaktor
GKZ.....Gesamtkeimzahl
-......... bei den Hefen < 7 KBE/g oder mL

Es fand hier zusätzliches Wachstum von Bakterien auf dem Nährboden für Hefe/Pilze statt.

Die Ergebnisse für die Keimgehaltsbestimmungen einer wässerigen Aufschlämmung von unbehandeltem Maismehl sind in der nachfolgenden Tabelle 3 zusammengefasst:

Tabelle 3: Keimgehaltsbestimmungen einer wässrigen Aufschlämmung von unbehandeltem Maismehl

| Bezeichnung | VF | Bakterien | Hefen | Pilze | GKZ |
|---|---|---|---|---|---|
| P346-001 | 10 | 7900[1] | - | 3400 | 11300 |
| P346-002 | 10 | 5000[2] | - | 4300 | 9300 |
| P346-003 | 10 | 180000[3] | - | 3000 | 183000 |
| P346-004 | 10 | 68000 | - | 1800 | 69800 |
| P346-005 | 10 | 20000[4] | - | 1600 | 21600 |

VF ....... Verdünnungsfaktor
GKZ.....Gesamtkeimzahl
-......... bei den Hefen < 7 KBE/g oder mL
[1]......... davon 1500 KBE/mL aerobe Sporenbildner
[2] ....... davon 2800 KBE/mL aerobe Sporenbildner
[3] ....... davon 8400 KBE/mL aerobe Sporenbildner
[4] ....... davon 1100 KBE/mL aerobe Sporenbildner

Die Werte wurden aus der Verdünnung ermittelt, da dies in der Praxis auch so eingesetzt wird.

Die in der DIN ISO 17516 geforderten mikrobiologischen Grenzwerte bezüglich der Gesamtkeimzahl (Bakterien/Hefen/Pilze) sind erfüllt, wenn diese kleiner 2000 KBE/g betragen. Beim Sonderfall für Produkte, die zur Anwendung bei Kleinkindern, oder zur Anwendung in der Nähe von Schleimhäuten bestimmt sind, liegt der Grenzwert bei kleiner 200 KGE/g.

Wie zu erwarten, ist der Keimstatus von trockenem Mehl als Feststoff (s. Tabelle 1 und 3: ohne Verdünnung, wobei VF = 1) sehr gering. Erst durch den Zusatz von Wasser (VF = 10) erhöht sich die Gesamtkeimzahl, die auf bis zu $10^6$ KBE/g ansteigen kann. Die akzeptable Gesamtkeimzahl von 2000 KBE/g nach DIN ISO 17516 ist somit weit überschritten. Eine Keimreduktion ist daher erforderlich.

## 3. Entkeimung mit organischer Säure

### 3.1. Entkeimung mit Zitronensäure

In Versuchen wurde zu einer Walnussschalenmehl-Aufschlämmung in Wasser, die eine Verkeimung von bis zu $10^6$ KBE/g aufweist, Zitronensäure zugegeben und auf pH 2,9 eingestellt. Dafür wurde 1,6 Gew.-% Zitronensäuremonohydrat eingesetzt. Diese Menge wurde bei den nachfolgenden Versuchen bei pH 2,9 beibehalten. Nach einer vorgegebenen Zeitspanne T in min wurde jeweils eine Probe entnommen und diese für 48h in einem Brutkasten bebrütet, um anschließend deren Keimbelastung zu bestimmen. Die Zeitspanne T entspricht daher der Einwirkzeit des Desinfektionsmittels, im vorliegenden Fall nur Zitronensäure.

Um sicherzustellen, dass die desinfizierende Wirkung in der Probe nach der Probeentnahme nicht weiter fortschreitet und die Werte verfälscht, wurde die desinfizierende Wirkung gestoppt, indem die Probe unmittelbar nach der Entnahme durch Zusatz von 50% Natronlauge auf einen pH-Wert von 7,0 eingestellt wurde.

Die Einwirkzeit bzw. Probeentnahme betrug T = 5 min, T = 15 min, T = 30 min, T = 45 min oder T = 60 min.

Die Keimzählung nach dem Bebrüten erfolgt mit den Environcheck®-Teststäbchen sofort oder in einem externen Labor. Für die externe Prüfung wird das Produkt mindestens 1 Tag bei 8°C gekühlt gelagert und im Styroporkasten

18

überführt.

Die Einzelheiten zu den genommenen Proben sind in Tabelle 4 angegeben:

Tabelle 4: Walnussschalenmehl-Aufschlämmung in Wasser mit und ohne Zusatz von Zitronensäure

| Bezeichnung | Zusatz | Probennahme/Einwirkzeit T |
|---|---|---|
| P366-001 | - | 0 min |
| P366-002 | Zitronensäure | 15 min |
| P366-003 | Zitronensäure | 30 min |
| P366-004 | Zitronensäure | 45 min |
| P366-005 | Zitronensäure | 60 min |

Die Ergebnisse der quantitativen Keimgehaltsbestimmung waren wie folgt:
Die Keimgehaltsbestimmung beruht auf der Ph. Eur.6.8 - Keimgehalt, Kapitel 2.6.12.

Tabelle 5: Keimgehaltsbestimmungen einer wässrigen Aufschlämmung von unbehandeltem Walnussschalenmehl mit und ohne Zusatz von Zitronensäure

| Bezeichnung | Bakterien | Hefen | Pilze | GKZ |
|---|---|---|---|---|
| P366-001 | 425 | 150 | 75 | 650 |
| P366-002 | 60 | 140 | 50 | 250 |
| P366-003 | 100 | 140 | 55 | 295 |
| P366-004 | 200 | - | 35 | 235 |
| P366-005 | 170 | 35 | 20 | 225 |
| GKZ.....Gesamtkeimzahl<br>-......... < 7 KBE/g oder mL | | | | |

Die Bakterien sind hier aerobe Sporenbildner.
Nähragar für Bakterien: Es wurde zusätzliches Wachstum von Hefen und Pilzen beobachtet.
Nähragar für Hefen und Pilze: Es wurde zusätzliches Wachstum von aeroben Sporenbildnern beobachtet.
Die Keimzahlen entsprechen KBE/g oder ml (Koloniebildende Einheiten), bezogen auf das Originalprodukt.
Die Anfangskeimzahl (Gesamtkeimzahl GKZ) der wässrigen Walnussschalenmehl-Aufschlämmung bei T = 0 min (P366-001) ist mit 650 KBE/g sehr gering. Dennoch konnte die Keimzahl durch die Zugabe von Zitronensäure mit einem pH-Wert von 2,9 nach 15 min auf 250 KBE/g reduziert werden. Diese Zahl veränderte sich nur noch minimal durch eine längere Säurebehandlung der Aufschlämmung.

### 3.2. Entkeimung mit Milchsäure

Die bei 3.1. beschriebenen Versuche mit und ohne Zusatz von Zitronensäure zu einer wässerigen Aufschlämmung von Walnussschalenmehl wurden in identischer Weise, wie oben beschrieben durchgeführt, außer, dass anstelle von Zitronensäure Milchsäure eingesetzt wurde.
Die Wirkung von Milchsäure war etwas stärker, so dass bereits nach T = 5 min eine deutliche Keimfrachtreduktion zu erkennen war.

### 3.3. Entkeimung mit unterschiedlichem pH-Wert

Die Versuche mit Zitronensäure (Versuche unter 3.1) und mit Milchsäure (Versuche unter 3.2) wurden jeweils wiederholt, jedoch wurde jeweils anstelle eines pH-Werts von 2,9 ein pH-Wert von 2,5 oder 2,0 oder 1,5 durch Zugabe von Zitronensäure oder Milchsäure in der wässerigen Walnussschalenmehl-Aufschlämmung eingestellt. Nach einer Zeitspanne von T = 5 min, T = 15 min, T = 30 min, T = 45 min oder T = 60 min wurde eine Probe entnommen, so dass die Einwirkzeit hierdurch bestimmt wird. Um sicherzustellen, dass die Desinfektionswirkung der Säure in der Probe nach der Probeentnahme beendet ist und nicht weiter fortschreitet und die Werte so verfälscht,-wurde wieder mit 50% Natronlauge auf einen pH-Wert von 7,0 eingestellt. Die anschließende Bebrütung der Proben erfolgte für 48h.

Es wurde festgestellt, dass die pH-Wert-Absenkung nur einen sehr geringen Effekt hatte. Eine keimfreie Situation wird erst nach 60 Minuten erreicht. Reduziert man die Bebrütungszeit auf 24 h, wäre eine keimfreie Situation bereits nach 30 min sichtbar gewesen.

### 4. Entkeimung mit Zitronensäure und Natriumbenzoat

#### 4.1. Vorversuche

Es sollte untersucht werden, inwieweit die Abtötungsgeschwindigkeit durch den Zusatz von Benzoat, repräsentiert durch Natriumbenzoat, erhöht werden kann.

Natriumbenzoat ist mikrobiologisch gesehen keine aktive Komponente, d.h. es ist zu erwarten, dass dieses als bekanntes Konservierungsmittel nur eine sehr geringe desinfizierende Wirkung besitzt. Natriumbenzoat dissoziiert bei einer pH-Wert-Absenkung in aktive Benzoesäure (pKs-Wert von 4,2), d.h. bei 4,2 ist Natriumbenzoat zu 50% dissoziiert. Während Natriumbenzoat mit 556 g/L bei 20°C sehr gut wasserlöslich ist, ist die Benzoesäure mit 3,4 g/L bei 20°C nur sehr schlecht wasserlöslich. Es lösen sich also maximal nur 0,34% der Benzoesäure in Wasser. Entsprechend liegen beim Einsatz von 0,68% Natriumbenzoat bei einem pH-Wert von 4,2 0,34% Benzoesäure in gelöster, aktiver Form vor. Ausgefallene Benzoesäure ist mikrobiologisch nicht mehr aktiv. Daher ist es wichtig das Löslichkeitsprodukt festzustellen, damit die Benzoesäure nach der pH-Wert-Absenkung nicht in kristalliner Form vorliegt.

Dazu wird in einem Vorversuch das Löslichkeitsprodukt der wirksamen Benzoesäure bei einem pH-Wert von 1, 2, 3, 4 und 5 ermittelt. Zur Verschärfung der Löslichkeitssituation wird dabei auch produktionstypisches, kaltes Wasser (ca. 10°C) eingesetzt.

Es wird daher zunächst geklärt, wieviel Natriumbenzoat man im neutralen Bereich bei pH 7 auflösen kann, ohne dass die Benzoesäure bei vorher festgelegten, tieferen pH-Werten ausfällt.

Als Variable wird der pH-Wert mit Zitronensäure auf 1 - 5 heruntergestellt und die Löslichkeit im Wasser geprüft. Nach 24h wird geprüft, ob Kristalle in der Lösung vorliegen. Zitronensäure ist demgegenüber mit einem pKs von 3,13 in Wasser mit 1450 g/L bei 20°C über den gesamten pH-Bereich sehr leicht löslich.

Ergebnis: Durch den Vorversuch konnte ermittelt werden, dass der Einsatz von 0,25 Gew.-% Natriumbenzoat ohne Schwierigkeiten bei einem pH-Wert von pH 1 in Lösung bleibt. Durch die Erhöhung des pH-Wertes erhöht sich auch die Löslichkeit des Benzoesäure-/Natriumbenzoat-Gleichgewichtes. Daher werden die weiteren Versuche mit 0,25 Gew.-% Natriumbenzoat durchgeführt.

#### 4.2. Versuche mit Zitronensäure und Natriumbenzoat

Zu einer Aufschlämmung Wallnussschalenmehl in Wasser, die eine Gesamtkeimzahl von bis zu $10^6$ KBE/g aufweist, wurde die ermittelte Menge an Natriumbenzoat zugegeben und gelöst. Der pH-Wert wurde mit Zitronensäure auf pH 2,9 abgesenkt und nach der Zeit T jeweils eine Probe entnommen (T entspricht der Einwirkzeit von Zitronensäure und Natriumbenzoat auf die verkeimte Wallnussschalenmehl-Aufschlämmung). Dann wurde wieder mit Natronlauge auf pH 7 eingestellt und im Brutschrank 48h bebrütet. Anschließend erfolgte wieder die Keimzählung der einzelnen Proben mit dem Envirocheck®-System intern oder mit einem externen Institut über eine vorher gekühlt gelagerte Ware für 1 Tag.

Die Einwirkzeit T betrug T = 5 min, T = 15 min, T = 30 min, T = 45 min, T = 60 min. Die Neutralisierung wurde unter Verwendung von 50%iger Natronlauge durchgeführt.

Die Einzelheiten zu den Proben sind in Tabelle 6 angegeben:

Tabelle 6: Walnussschalenmehl-Aufschlämmung in Wasser mit und ohne Zusatz von Zitronensäure und Natriumbenzoat

| Bezeichnung | Zusatz | Probennahme/Einwirkzeit T |
|---|---|---|
| P375-001 | - | 0 min |
| P375-002 | 1,60 Gew.-% Zitronensäure + 0,25 Gew.-% Natriumbenzoat | 15 min |
| P375-003 | 1,60 Gew.-% Zitronensäure + 0,25 Gew.-% Natriumbenzoat | 30 min |
| P375-004 | 1,60 Gew.-% Zitronensäure + 0,25 Gew. Natriumbenzoat | 45 min |
| P375-005 | 1,60 Gew.-% Zitronensäure + 0,25 Gew. Natriumbenzoat | 60 min |

Die Ergebnisse der quantitativen Keimgehaltsbestimmung waren wie folgt:
Die Keimgehaltsbestimmung beruht auf der Ph. Eur.6.8 - Keimgehalt, Kapitel 2.6.12.

Tabelle 7: Keimgehaltsbestimmungen einer wässrigen Aufschlämmung von unbehandeltem Walnussschalenmehl mit und ohne Zusatz von Zitronensäure und Natriumbenzoat

| Bezeichnung | Bakterien | Hefen | Pilze | GKZ |
|---|---|---|---|---|
| P375-001 | 70 | 415 | 15 | 500 |
| P375-002 | 40 | - | - | 40 |
| P375-003 | 40 | - | - | 40 |
| P375-004 | 50 | - | - | 50 |
| P375-005 | 65 | - | - | 65 |
| GKZ.....Gesamtkeimzahl<br>-......... < 7 KBE/g oder mL | | | | |

Die Bakterien sind hier aerobe Sporenbildner.

Nähragar für Bakterien: Es wurde zusätzliches Wachstum von Hefen und Pilzen beobachtet (nur bei Probe P375-001).

Nähragar für Hefen und Pilze: Es wurde zusätzliches Wachstum von aeroben Sporenbildnern beobachtet.

Die Keimzahlen entsprechen KBE/g oder ml (Koloniebildende Einheiten), bezogen auf das Originalprodukt.

Durch den Einsatz von 0,25 Gew.-% Natriumbenzoat zur Walnussschalenmehl-Aufschlämmung, die mit Zitronensäure auf einen pH-Wert von 2,9 gebracht worden ist, konnte die Keimfracht bereits nach 15 min auf einen sehr akzeptablen Wert von 40 KBE/g gebracht werden.

Überraschend ist, dass ein Konservierungsmittel, wie die Benzoesäure, bereits nach so kurzer Zeit in Kombination mit Zitronensäure eine desinfizierende Wirkung zeigt.

Bei Einstellung eines pH-Werts von 2,3 durch die Zitronensäure konnte dieses Ergebnis nochmals verbessert werden.

### 4.3. Versuche mit Milchsäure und Natriumbenzoat

Die Versuche unter 4.2 wurden wiederholt, wobei jedoch anstelle von Zitronensäure Milchsäure verwendet wurde. Milchsäure ist mit einem pKs von 3,9 vollständig in Wasser löslich und mit Wasser mischbar.

Die Einzelheiten zu den Proben sind in Tabelle 8 angegeben:

Tabelle 8: Walnussschalenmehl-Aufschlämmung in Wasser mit und ohne Zusatz von Milchsäure und Natriumbenzoat

| Bezeichnung | Zusatz | Probennahme/Einwirkzeit T |
|---|---|---|
| P487-001 | 2,14 Gew. % Milchsäure + 0,34 Gew.-% Natriumbenzoat | 5 min |
| P487-002 | 2,14 Gew. % Milchsäure + 0,34 Gew.-% Natriumbenzoat | 15 min |
| P487-003 | 2,14 Gew. % Milchsäure + 0,34 Gew.-% Natriumbenzoat | 30 min |
| P487-004 | 2,14 Gew. % Milchsäure + 0,34 Gew. Natriumbenzoat | 45 min |
| P487-005 | 2,14 Gew. % Milchsäure + 0,34 Gew. Natriumbenzoat | 60 min |

Die Ergebnisse der quantitativen Keimgehaltsbestimmung waren wie folgt:

Die Keimgehaltsbestimmung beruht auf der Ph. Eur.6.8 - Keimgehalt, Kapitel 2.6.12.

Tabelle 9: Keimgehaltsbestimmungen einer wässrigen Aufschlämmung von unbehandeltem Walnussschalenmehl mit und ohne Zusatz von Milchsäure und Natriumbenzoat

| Bezeichnung | Bakterien | Hefen | Pilze | GKZ |
|---|---|---|---|---|
| P487-001 | 55 | - | - | 55 |
| P487-002 | 50 | - | - | 50 |
| P487-003 | 55 | - | - | 55 |
| P487-004 | 85[1)] | - | - | 85 |

(fortgesetzt)

| Bezeichnung | Bakterien | Hefen | Pilze | GKZ |
|---|---|---|---|---|
| P487-005 | 70 | - | - | 70 |

| |
|---|
| GKZ.....Gesamtkeimzahl<br>-......... < 7 KBE/g oder mL<br>1)........ davon 50 KBE/mL aerobe Sporenbildner |

Die Bakterien sind hier aerobe Sporenbildner.

Nährboden für Hefen und Pilze: Es wurde Bakterienwachstum beobachtet.

Die Keimzahlen entsprechen KBE/g oder ml (Koloniebildende Einheiten), bezogen auf das Originalprodukt.

Wie man deutlich erkennen kann, ist bereits nach 5 Minuten die Keimreduktion deutlich sichtbar. Lediglich anaerobe Sporenbildner sind übriggeblieben, die jedoch in dem System unvermeidbar sind und bei einer ausreichenden Konservierung des Endproduktes auch nicht auskeimen.

**5. Untersuchung der Einwirkzeit mit einem erfindungsgemäßen Desinfektionsmittel**

Es wurde die Einwirkzeit des erfindungsgemäßen Desinfektionsmittels untersucht, wobei als organische Säure Zitronensäure, als Benzoat Natriumbenzoat und als nichtionisches Tensid Genapol® UD 88 (C9-11 Pareth 8) (gehört zu den Polyalkylenglykolethern und ist ein Fettalkoholethoxylat mit 8EO) eingesetzt wurde. Die Menge an Natriumbenzoat, Zitronensäure und nichtionischem Tensid lag jeweils im erfindungsgemäßen Bereich. Es wurden folgende Verfahren eingesetzt:

Potentiometrische Bestimmung des pH-Werts: Ph. Eur. 8.8 - pH-Wert, Kapitel 2.2.3.

Keimgehaltsbestimmung: Ph. Eur. 6.8 - Keimgehalt, Kapitel 2.6.12. Abweichend hiervon wurde eine Neutralisierung bzw. Verdünnung durchgeführt. Es erfolgte eine Einfachbestimmung.

Die Keimbelastung der wässrigen Aufschlämmung von unbehandeltem Walnussschalenmehl war so hoch, dass diese nicht gezählt werden konnte. Mit diesem hochgradig Keim-belasteten Material wurden die Versuche durchgeführt. D.h. das erfindungsgemäße Desinfektionsmittel wurde zur Aufschlämmung zugegeben und nach der Einwirkzeit T jeweils eine Probe entnommen und wie bereits bei den vorangehenden Versuchen detailliert erläutert deren Keimbelastung überprüft.

Die Versuche zeigten, dass eine Einwirkzeit des erfindungsgemäßen Desinfektionsmittels von 30 s bereits ausreicht, um die erwünschte Keimreduktion zu erzielen.

Die Neutralisation der Probe unmittelbar nach der Probennahme als Vorsichtsmaßnahme, um die desinfizierende Wirkung des Desinfektionsmittels zu stoppen und die Verfälschung der Werte zu verhindern, war eigentlich nicht nötig, da die Keimreduktion mit und ohne NaOH-Zusatz praktisch identisch war.

Die bisherigen Versuche zeigten, dass die Verwendung von Zitronensäure allein die Keimbelastung zwar verringert, aber dies nicht in ausreichendem Maße. Der Zusatz von Natriumbenzoat zu Zitronensäure konnte die Keimfracht in der Aufschlämmung weiter reduzieren, jedoch sind mindestens 15 min Einwirkzeit erforderlich, um nennenswerte Ergebnisse zu liefern. Die erfindungsgemäße Kombination von Zitronensäure/Natriumbenzoat/Genapol® UD 88 (C9-11 Pareth 8) lieferte demgegenüber eine synergistische Steigerung der Desinfektionswirkung, wobei eine Einwirkzeit von 30 s bereits ausreicht, um die Keimreduktion auf ein Mindestmaß abzusenken.

**6. Untersuchung der Einwirkzeit mit weiteren erfindungsgemäßen Desinfektionsmitteln**

a) Die Versuche unter 5. wurden wiederholt, jedoch wurde anstelle des nichtionischen Tensids Genapol® UD 88 (C9-11 Pareth 8) ein anderes nichtionisches Tensid, nämlich Plantacare ® 810 UP (ein $C_8$-$C_{10}$-Alkylpolyglucoside bzw. -glycoside), eingesetzt.

Es wurden dieselben kurzen Einwirkzeiten des Desinfektionsmittels von 30 s gefunden, die bereits ausreichend waren, um die Keimbelastung der Aufschlämmung in den Proben auf ein Minimum abzusenken.

b) Die Versuche unter 5. wurden wiederholt, jedoch wurde anstelle des nichtionischen Tensids ein amphoteres Tensid, nämlich Ammonyx LO ($C_{12}$-$C_{14}$-Aminoxide), eingesetzt.

Es wurden dieselben kurzen Einwirkzeiten des Desinfektionsmittels von 30 s gefunden, die bereits ausreichend waren, um die Keimbelastung der Aufschlämmung in den Proben auf ein Minimum abzusenken.

c) Die Versuche unter 5. wurden wiederholt, jedoch wurde anstelle des nichtionischen Tensids eine Mischung aus nichtionischem und amphoterem Tensid, nämlich Plantacare® 810 UP (ein $C_8$-$C_{10}$-Alkylpolyglucoside bzw. -glycoside) als nichtionisches Tensid und Ammonyx LO ($C_{12}$-$C_{14}$-Aminoxide) als amphoteres Tensid, eingesetzt. Es wurde eine 1:1 Mischung der Tenside verwendet.

Es wurden dieselben kurzen Einwirkzeiten des Desinfektionsmittels von 30 s gefunden, die bereits ausreichend waren, um die Keimbelastung der Aufschlämmung in den Proben auf ein Minimum abzusenken.

**7. Bestimmung der Keimreduktion im in-situ Verfahren mit dem erfindungsgemäßen Desinfektionsmittel**

Als zu entkeimendes Medium wurde wässrige 3%ige Walnussschalenmehl-Aufschlämmung mit einem pH-Wert von 6,7 eingesetzt.

Das erfindungsgemäße Desinfektionsmittel (1) enthielt eine wässrige Lösung aus Zitronensäure, Natriumbenzoat und nichtionischem Tensid in Form von Genapol® UD 88, jeweils im erfindungsgemä-βen Bereich.

Das erfindungsgemäße Desinfektionsmittel (2) enthielt eine wässrige Lösung aus Zitronensäure, Natriumbenzoat und nichtionischem Tensid in Form von Plantacare® 810 UP, jeweils im erfindungsgemäßen Bereich.

Es wurden folgende Verfahren eingesetzt:

Potentiometrische Bestimmung des pH-Werts: Ph. Eur. 8.8 - pH-Wert, Kapitel 2.2.3.
Keimgehaltsbestimmung: Ph. Eur. 6.8 - Keimgehalt, Kapitel 2.6.12.

Es wurde wie folgt vorgegangen:

1. Von der wässrigen Walnussschalenmehl-Aufschlämmung mit einem pH-Wert von 6,7 wurde die Keimzahl bestimmt.

2. Anschließend erfolgte die Ansäuerung mit dem erfindungsgemäßen Desinfektionsmittel auf pH 2,9.

3. Der pH-Wert wurde 30 s gehalten und dann die Keimzahl bestimmt.

4. Dann wurde ein Teil der Aufschlämmung mit 50%iger NaOH Lösung auf pH 7 gebracht und wieder die Keimzahl bestimmt.

5. Im Anschluss wurde die restliche Aufschlämmung mit 50%iger NaOH-Lösung auf pH 7 gebracht und wieder die Keimzahl bestimmt.

Die Ergebnisse waren wie folgt: Bereits nach 30 s erfolgte durch den Einsatz des erfindungsgemäßen Desinfektionsmittels eine Keimreduktion unter die Nachweisgrenze.

**8. Beispiele 1 bis 8**

**Bestimmung der Keimreduktion verschiedener Zusammensetzungen des erfindungsgemäßen Desinfektionsmittels bei verschiedenen Einzelkeimen**

Mit dem erfindungsgemäßen Desinfektionsmittel wurde die Keimreduktion für verschiedene Bakterien im Einzelnen überprüft.

Es wurden folgende Bakterien getestet:

Tabelle 10: verwendete Bakterien

| Bakterien: | |
| --- | --- |
| *Pseudomonas aeruginosa* | DSM 1128 |
| *Staphyloccocus aureus* | DSM 799 |
| *Escherichia coli* | DSM 787 |
| *Pluralibacter gergoviae* | DSM 9245 |

Die erfindungsgemäßen Desinfektionsmittel hatten die Zusammensetzungen wie in Tabelle 11 angegeben.

Testverfahren:

Es wurden Desinfektionstests in wässriger Lösung gegenüber 4 Einzelkeimen durchgeführt (Methode: BCL M 04.01.01).

Probenbeschreibung und Versuchsziel:

Die untersuchten Proben sind jeweils Säurepulvergemische, die in wässriger Lösung desinfizierende Eigenschaften besitzen. In der vorliegenden Untersuchung wurde diese Eigenschaft gegenüber vier bakteriellen Testkeimen unter Zugrundelegung kurzer Einwirkzeiten geprüft.

Keimreduktionstest - Versuchsbeschreibung:

Aus den in Tabelle 11 angegebenen Zusammensetzungen wurden jeweils 13%ige wässrige Lösungen hergestellt.
Als Inocula wurden frisch zubereitete Suspensionen der in Tabelle 10 genannten Bakterien bereitgestellt. Der Titer dieser Lösungen wurde durch eine externe Verdünnungsreihe festgestellt.
Nacheinander wurde je ein 10 ml-Ansatz der Lösungen mit 100 µl einer der 4 Beimpfsuspensionen inokuliert. Nach jeweils 30 Sekunden, 1 Minute, 2 Minuten und 5 Minuten wurde der jeweilige beimpfte Ansatzmit 0,1 molarer Natronlaugelösung neutralisiert. Diese, nun neutralisierten, Lösungen wurden mittels eines Spiralplaters zu 100 µl auf CASO-Nähragarschalen ausplattiert. Die Schalen wurden sodann für insgesamt 5 Tage in einem Brutschrank bei 30°C bebrütet und nach 2 Tagen, sowie nach 5 Tagen auf das Wachstum von Bakterienkolonien ausgezählt.

Auswertung:

Die nachstehenden Tabelle 11 -15 zeigen die jeweiligen Zusammensetzungen für die erfindungsgemäßen Desinfektionsmittel und die Ergebnisse der Keimreduktionstests gegenüber 4 Testkeimen.
Das verwendete Plantacare® 810 UP ist ein nichtionisches Tensid auf folgender Basis: $C_8$-$C_{10}$-Alkylpolyglucoside oder -glycoside. Im Handel ist es als viskose, flüssige Zusammensetzung mit einem Wassergehalt von 35 - 38% erhältlich. Das verwendete Genapol® UD 88 ist ebenfalls ein nichtionisches Tensid mit der Zusammensetzung: C9-11 Pareth 8. Dermosoft® Octiol ist Caprylylglykol (1,2-Octandiol) und stellt ein Mittel zur Feuchtigkeitsregulierung dar. Es ist bei Raumtemperatur (20-25°C) fest.

Tabelle 11: Erfindungsgemäße Zusammensetzungen jeweils in Form eines festen Konzentrats

| Bestandteil | Erfindungsgemäße Desinfektionsmittel-Zusammensetzung | | | | | | | |
|---|---|---|---|---|---|---|---|---|
| | Bsp.1 [Gew.-%] | Bsp.2 [Gew.-%] | Bsp.3 [Gew.-%] | Bsp.4 [Gew.-%] | Bsp.5 [Gew.-%] | Bsp.6 [Gew.-%] | Bsp.7 [Gew.-%] | Bsp.8 [Gew.-%] |
| Natriumbenzoat | 12,0 | 5,0 | 21,75 | 12,0 | 12,0 | 11,5 | 9,7 | 25,8 |
| Plantacare® 810 UP | 17,0 | 10,0 | 21,75 | 8,5 | | | 13,9 | |
| Genapol®UD 88 | | | | 8,5 | 17,0 | 16,4 | | 16,1 |
| Zitronensäuremonohydrat | 54,0 | 81,0 | 34,8 | 54,0 | 54,0 | | | |
| Dermosoft® Octiol | 2,0 | 4,0 | 2,0 | 2,0 | 2,0 | 3,0 | 3,0 | 3,0 |
| Milchsäure 98% | | | | | | 65,5 | 55,6 | 55,1 |
| NaCl | 15,0 | | 19,7 | 15,0 | 15,0 | 3,6 | 17,8 | |
| **gesamt** | **100** | **100** | **100** | **100** | **100** | **100** | **100** | **100** |

Die erfindungsgemäßen Zusammensetzungen, die jeweils als feste Konzentrate vorliegen, wurden in 13%iger wässriger Lösung verdünnt eingesetzt. Die Zusammensetzungen für die 13%ige wässrige Lösung sind in der nachfolgenden Tabelle 12 angegeben:

Tabelle 12: Erfindungsgemäße Zusammensetzungen der Konzentrate von Tabelle 11, jeweils in 13%ige wässriger Lösung

| Bestandteil | Erfindungsgemäße Desinfektionsmittel-Zusammensetzung | | | | | | | |
|---|---|---|---|---|---|---|---|---|
| | Bsp.1 [Gew.-%] | Bsp.2 [Gew.-%] | Bsp.3 [Gew.-%] | Bsp.4 [Gew.-%] | Bsp.5 [Gew.-%] | Bsp.6 [Gew.-%] | Bsp.7 [Gew.-%] | Bsp.8 [Gew.-%] |
| Natriumbenzoat | 1,56 | 0,65 | 2,83 | 1,56 | 1,56 | 1,50 | 1,26 | 3,35 |
| Plantacare® 810 UP | 2,21 | 1,30 | 2,83 | 1,11 | | | 1,81 | |
| Genapol®UD 88 | | | | 1,11 | 2,21 | 2,13 | | 2,09 |
| Zitronensäuremonohydrat | 7,02 | 10,53 | 4,52 | 7,02 | 7,02 | | | |
| Dermosoft® Octiol | 0,26 | 0,52 | 0,26 | 0,26 | 0,26 | 0,39 | 0,39 | 0,390 |
| Milchsäure 98% | | | | | | 8,52 | 7,23 | 7,16 |
| NaCl | 1,95 | | 2,56 | 1,95 | 1,95 | 0,47 | 2,31 | |
| **gesamt** | **13,00** | **13,00** | **13,00** | **13,01** | **13,00** | **13,01** | **13,00** | **12,99** |
| Wassergehalt bei 13%iger Lösung | 87,00 | 87,00 | 87,00 | 86,99 | 87,00 | 86,99 | 87,00 | 87,01 |

Tabelle 13: Erfindungsgemäße Zusammensetzungen und deren Keimreduktion nach 30 Sekunden, 60 Sekunden und 2 Minuten

| | Erfindungsgemäße Desinfektionsmittel-Zusammensetzung | | | | | | | |
|---|---|---|---|---|---|---|---|---|
| | Bsp.1 | Bsp.2 | Bsp.3 | Bsp.4 | Bsp.5 | Bsp.6 | Bsp.7 | Bsp.8 |
| **Bakterien:** | **Keimgehalt [KBE/mL] nach 30 Sekunden** | | | | | | | |
| **St. aureus** | < 13 | < 13 | < 13 | < 13 | < 13 | < 13 | < 13 | < 13 |
| **Ps. aeruginosa** | < 13 | < 13 | < 13 | < 13 | < 13 | < 13 | < 13 | < 13 |
| **E. coli** | < 13 | < 13 | < 13 | < 13 | < 13 | < 13 | < 13 | < 13 |
| **Pl. gergoviae** | < 13 | < 13 | < 13 | < 13 | < 13 | < 13 | < 13 | < 13 |
| | | | | | | | | |
| **Bakterien:** | **Keimgehalt [KBE/mL] nach 60 Sekunden** | | | | | | | |
| **St. aureus** | < 13 | < 13 | < 13 | < 13 | < 13 | < 13 | < 13 | < 13 |
| **Ps. aeruginosa** | < 13 | < 13 | < 13 | < 13 | < 13 | < 13 | < 13 | < 13 |
| **E. coli** | < 13 | < 13 | < 13 | < 13 | < 13 | < 13 | < 13 | < 13 |
| **Pl. gergoviae** | < 13 | < 13 | < 13 | < 13 | < 13 | < 13 | < 13 | < 13 |
| | **Erfindungsgemäße Desinfektionsmittel-Zusammensetzung** | | | | | | | |
| | Bsp.1 | Bsp.2 | Bsp.3 | Bsp.4 | Bsp.5 | Bsp.6 | Bsp.7 | Bsp.8 |
| **Bakterien:** | **Keimgehalt [KBE/mL] nach 2 Minuten** | | | | | | | |
| **St. aureus** | < 13 | < 13 | < 13 | < 13 | < 13 | < 13 | < 13 | < 13 |
| **Ps. aeruginosa** | < 13 | < 13 | < 13 | < 13 | < 13 | < 13 | < 13 | < 13 |
| **E. coli** | < 13 | < 13 | < 13 | < 13 | < 13 | < 13 | < 13 | < 13 |
| **Pl. gergoviae** | < 13 | < 13 | < 13 | < 13 | < 13 | < 13 | < 13 | < 13 |

Tabelle 14: Erfindungsgemäße Zusammensetzungen und deren Keimreduktion nach 5 Minuten

| | Erfindungsgemäße Desinfektionsmittel-Zusammensetzung | | | | | | | |
|---|---|---|---|---|---|---|---|---|
| | Bsp.1 | Bsp.2 | Bsp.3 | Bsp.4 | Bsp.5 | Bsp.6 | Bsp.7 | Bsp.8 |
| **Bakterien:** | Keimgehalt [KBE/mL] nach 5 Minuten | | | | | | | |
| **St. aureus** | < 13 | < 13 | < 13 | < 13 | < 13 | < 13 | < 13 | < 13 |
| **Ps. aeruginosa** | < 13 | < 13 | < 13 | < 13 | < 13 | < 13 | < 13 | < 13 |
| **E. coli** | < 13 | < 13 | < 13 | < 13 | < 13 | < 13 | < 13 | < 13 |
| **Pl. gergoviae** | < 13 | < 13 | < 13 | < 13 | < 13 | < 13 | < 13 | < 13 |

Im Einzelnen waren die Keimgehaltsmessungen für die Zusammensetzung A wie folgt:

Tabelle 15: Keimgehaltsmessungen für die Zusammensetzung von Beispiel 1

| Keim | Inokulations-Keimzahl [KBE/mL] | Keimgehalt [KBE/mL] nach | | | |
|---|---|---|---|---|---|
| | | 30 Sekunden | 60 Sekunden | 2 Minuten | 5 Minuten |
| St. aureus | 9,5 E6 | < 13 | < 13 | < 13 | < 13 |
| Ps. aeruginosa | 5,5 E6 | < 13 | < 13 | < 13 | < 13 |
| E. coli | 4,0 E6 | < 13 | < 13 | < 13 | < 13 |
| Pl. gergoviae | 1,5 E6 | < 13 | < 13 | < 13 | < 13 |

Für die Zusammensetzungen der Beispiele2 bis 8 war die Inokulations-Keimzahl zu Beginn der verschiedenen Tests jeweils in entsprechender Größe.

Ergebnis:

Die Keimreduktionstests an den eingesetzten erfindungsgemäßen Desinfektionsmitteln der Beispiele 1 bis 8 zeigte in 13%-iger wässriger Lösung jeweils eine überraschend hohe Keimreduktionswirkung gegenüber den bakteriellen Testkeimen *Escherichia coli, Pseudomonas aeruginosa, Staphylococcus aureus und Pluralibacter gergoviae.* Bereits nach 30 Sekunden Einwirkzeit konnten diese Keime jeweils von anfänglich über 1E6 Kolonien-bildenden Einheiten (KBE)/ml auf < 13 KBE/ml reduziert werden. Mit anderen Worten hat das Desinfektionsmittel der vorliegenden Erfindung bereits nach einer Einwirkzeit von 30 Sekunden seine vollständige Wirksamkeit entfaltet und die Keimbelastung bei typischen Keimen auf ein Minimum reduziert.

**9. Beispiele 9 bis 22**

**Bestimmung der Keimreduktion anhand weiterer Zusammensetzungen des erfindungsgemä-βen Desinfektionsmittels**

Anhand einiger wässriger flüssiger Zusammensetzungen für das erfindungsgemäße Desinfektionsmittel wurde wieder die Keimreduktion im Einzelnen überprüft. Die Zusammensetzungen und Ergebnisse sind in den nachfolgenden Tabellen im Einzelnen zusammengefasst:
Das verwendete Plantacare® 810 UP ist ein nichtionisches Tensid, das im Handel in Form einer wässrigen Lösung auf folgender Basis erhältlich ist: $C_8$-$C_{10}$-Alkylpolyglucoside oder -glycoside. Ammonyx LO ist ein amphoteres Tensid in Form von C12-C14-Aminoxiden. Dermosoft® Octiol ist Caprylylglykol und stellt ein Mittel zur Feuchtigkeitsregulierung dar. Hydrolite 6 ist ein 1,2 Hexandiol und stellt ein Mittel zur Feuchtigkeitsregulierung dar. Glycerin ist ein Mittel zur Feuchtigkeitsregulierung.

Tabelle 16A: Erfindungsgemäße Zusammensetzungen und deren Keimreduktion

| Bestandteil | Beispiel 9 | Beispiel 10 | Beispiel 11 | Beispiel 12 | Beispiel 13 | Beispiel 14 | Beispiel 15 |
|---|---|---|---|---|---|---|---|
| | [Gew.-%] | [Gew.-%] | [Gew.-%] | [Gew.-%] | [Gew.-%] | [Gew.-%] | [Gew.-%] |
| demineralisiertes Wasser | 92,90 | 91,00 | 90,00 | 95,30 | 91,30 | 91,05 | 90,85 |
| Zitronensäure mono | 0,80 | 1,00 | 1,00 | 1,30 | 1,30 | 1,60 | 1,90 |
| Plantacare® 810 UP | 1,8 | 2,00 | 3,00 | 2,00 | 3,00 | 2,00 | 3,00 |
| Natriumbenzoat | 0,50 | 0,50 | 0,50 | 0,40 | 0,40 | 0,35 | 0,25 |
| Glycerin | 2,00 | 4,00 | 4,00 | | 2,00 | 4,00 | 4,00 |
| Hydrolite 6 | 1,00 | 1,00 | 1,00 | 0,50 | 1,00 | 1,00 | |
| Dermosoft® Octiol | 1,00 | 0,50 | 0,50 | 0,50 | 1,00 | | |
| Ammonyx LO | | | | | | | |
| | | | | | | | |
| pH Wert | 3,5 | 3,5 | 3,5 | 3 | 3 | 2,5 | 2 |
| | | | | | | | |
| **EN 1275** | + | + | + | + | + | + | + |
| **EN 1650** | + | + | + | + | + | + | + |
| + ... Reduktion der Keimzahl innerhalb von 30 s unter die Nachweisgrenze | | | | | | | |

Tabelle 16B: Erfindungsgemäße Zusammensetzungen und deren Keimreduktion

| Bestandteil | Beispiel 16 | Beispiel 17 | Beispiel 18 | Beispiel 19 | Beispiel 20 | Beispiel 21 | Beispiel 22 |
|---|---|---|---|---|---|---|---|
| | [Gew.-%] | [Gew.-%] | [Gew.-%] | [Gew.-%] | [Gew.-%] | [Gew.-%] | [Gew.-%] |
| demineralisiertes Wasser | 83,10 | 88,00 | 85,00 | 82,50 | 83,10 | 89,50 | 88,00 |
| Zitronensäure mono | 5,50 | 5,50 | 4,50 | 4,00 | 5,50 | 4,00 | 4,00 |
| Plantacare 810 UP | | | | | | | |
| Natriumbenzoat | 0,40 | 0,50 | 0,50 | 0,50 | 0,40 | 0,50 | 0,50 |
| Glycerin | 3,00 | 2,00 | 2,00 | 3,00 | 3,00 | 2,00 | 4,00 |
| Hydrolite 6 | | | | | 1,00 | 1,00 | 1,00 |
| Dermosoft Octiol | | | | | 1,00 | 1,00 | 0,50 |
| Ammonyx LO | 8,00 | 4,00 | 8,00 | 10,00 | 6,00 | 2,00 | 2,00 |
| | | | | | | | |
| pH Wert | 2,5 | 2,5 | 3 | 3,5 | 2,50 | 3,50 | 3,50 |
| | | | | | | | |
| **EN 1275** | + | + | + | + | + | + | + |
| **EN 1650** | + | + | + | + | + | + | + |
| + ... Reduktion der Keimzahl innerhalb von 30 s unter die Nachweisgrenze | | | | | | | |

Ergebnis:

Die Keimreduktionstests an den eingesetzten erfindungsgemäßen Desinfektionsmitteln der Beispiele 9 bis 22 zeigten jeweils eine überraschend hohe Keimreduktionswirkung gegenüber den bakteriellen Testkeimen *Escherichia coli, Pseudomonas aeruginosa, Staphylococcus aureus und Pluralibacter gergoviae*. Bereits nach 30 Sekunden Einwirkzeit konnten diese Keime jeweils von anfänglich über 1E6 Kolonien-bildenden Einheiten (KBE)/ml auf unterhalb der Nachweisgrenze reduziert werden. Das Desinfektionsmittel der vorliegenden Erfindung hat bereits nach einer Einwirkzeit von 30 Sekunden seine vollständige Wirksamkeit entfaltet und die Keimbelastung bei typischen Keimen auf ein Minimum reduziert.

Insbesondere ist das Vorliegen von einem oder mehreren Mitteln zur Feuchtigkeitsregulierung besonders vorteilhaft, da diese die antibakterielle und insbesondere fungizide Wirksamkeit des Desinfektionsmittels noch verstärken.

**10. Variation der Menge von Natriumbenzoat im erfindungsgemäßen Desinfektionsmittel**

In Versuchen ergab sich, dass auch eine Variation der Menge von Natriumbenzoat im gesamten erfindungsgemäßen Bereich von 0,01 - 30,0 Gew.-%, insbesondere 0,25 - 30,0 Gew.-%, zu der gewünschten kurzen Einwirkzeit und Keimreduktion führt, da die Erhöhung zu einem maximalen Vorhandensein der aktiven Benzoesäure bis zur Sättigung in der Lösung gegeben ist.

**Patentansprüche**

1. Desinfektionsmittel, umfassend

   eine organische Säure, ausgewählt aus der Gruppe, bestehend aus Zitronensäure, Milchsäure und Bernsteinsäure, oder eine Mischung dieser;
   ein Benzoat, ausgewählt aus der Gruppe, bestehend aus Natriumbenzoat, Kaliumbenzoat oder Calciumbenzoat, oder Mischungen dieser;
   ein oder mehrere Tenside, ausgewählt aus der Gruppe nichtionischer Tenside und/oder amphoterer Tenside, die in Wasser löslich oder emulgierbar oder dispergierbar sind,
   das Desinfektionsmittel in wässriger flüssiger Zusammensetzung oder fester Zusammensetzung vorliegt,
   wobei eine wässrige flüssige Zusammensetzung des Desinfektionsmittels die ein oder mehreren nichtionischen Tenside in einer Menge im Bereich von 1,1 bis 3 Gew.-% enthält und/oder die ein oder mehreren amphoteren Tenside in einer Menge im Bereich von 1,1 bis 24 Gew.-% enthält,
   die feste Zusammensetzung ein Konzentrat darstellt und die wässrige flüssige Zusammensetzung das Konzentrat in verdünnter Form darstellt, in der die ein oder mehreren nichtionischen Tenside in einer Menge von 1,1 bis 3 Gew.-% und/oder die ein oder mehreren amphoteren Tenside in einer Menge von 1,1 bis 24 Gew.-% enthalten sind, und
   das Desinfektionsmittel nur für die äußere Anwendung vorgesehen ist,
   wobei die ein oder mehreren nichtionischen Tenside ausgewählt sind aus der Gruppe, bestehend aus Fettalkoholalkoxylaten, Alkylpolyglucosiden oder Alkylpolyglycosiden (APGs), jeweils alleine oder Mischungen dieser,
   wobei die ein oder mehreren amphoteren Tenside ausgewählt sind aus der Gruppe, bestehend aus Aminoxiden und
   bei Vorliegen von einem oder mehreren nichtionischen Tensiden gleichzeitig ein oder mehrere Mittel zur Feuchtigkeitsregulierung vorliegen, die in einer Menge von 0,1 bis 5 Gew.-% vorhanden sind,
   mit der Maßgabe, dass keine anderen Tenside außer den nichtionischen und/oder amphoteren Tensiden vorhanden sind, keine $C_1$-$C_3$-(Iso-)Alkohole vorliegen, wobei $C_1$-$C_3$-(Iso-)Alkohole Methanol, Ethanol, n-Propanol und Isopropanol darstellen, und die Verbindungen Chlorhexidindiglukonat, Sorbitancaprylat und Phenoxyethanol nicht enthalten sind.

2. Desinfektionsmittel nach Anspruch 1,
   **dadurch gekennzeichnet,**
   **dass** das oder die nichtionischen Tenside, ausgewählt sind aus der Gruppe, bestehend aus Polyoxyethylenethern von Laurylalkoholen, $C_9$-$C_{11}$ Pareth-8, $C_8$-$C_{10}$-Alkylpolyglycosiden oder -glucosiden, jeweils alleine oder Mischungen dieser.

3. Desinfektionsmittel nach einem der Ansprüche 1 oder 2,
   **dadurch gekennzeichnet,**
   **dass** die ein oder mehreren nichtionischen Tenside einen HLB-Wert von $\geq 7$, insbesondere $\geq 12$ aufweisen oder einen Trübungspunkt von 40°C oder größer (1g in 100 ml Wasser) haben.

4. Desinfektionsmittel nach einem der vorangehenden Ansprüche 1 bis 3,
**dadurch gekennzeichnet,**

**dass** die ein oder mehreren amphoteren Tenside ausgewählt sind aus der Gruppe, bestehend aus $C_{12}$-$C_{14}$-Aminoxi-den.

5. Desinfektionsmittel nach einem der vorangehenden Ansprüche 1 bis 4,
**dadurch gekennzeichnet,**

**dass** das Desinfektionsmittel in wässriger flüssiger Zusammensetzung oder als feste Zusammensetzung in Form eines Konzentrats vorliegt, insbesondere als Lösung, Emulsion, Lotion, Spray, Gel, Schaum oder als Feststoff in Form eines Konzentrats vorliegt, wobei das Konzentrat wasserlöslich oder in Wasser emulgierbar oder dispergierbar ist.

6. Desinfektionsmittel nach einem der vorangehenden Ansprüche 1 bis 5,
**dadurch gekennzeichnet,**

**dass** im Desinfektionsmittel in Form einer festen Zusammensetzung die eine oder mehreren organischen Säuren, je nach Anwendungsfall, in einer Menge vorliegen, die ausgewählt ist aus 5 - 85 Gew.-%, 10 - 85 Gew.-%, 15 - 85 Gew.-%, 20 - 85 Gew.-%, 25 - 85 Gew.-% oder 30 - 85 Gew.-%;
oder
**dass** im Desinfektionsmittel in Form einer wässrigen flüssigen Zusammensetzung die eine oder mehreren organischen Säuren, je nach Anwendungsfall, in einer Menge vorliegen, die ausgewählt ist aus 0,1 bis 15 Gew.-%, bevorzugt 0,5 bis 12 Gew.-%.

7. Desinfektionsmittel nach einem der vorangehenden Ansprüche 1 bis 6,
**dadurch gekennzeichnet,**

**dass** im Desinfektionsmittel in Form einer festen Zusammensetzung die ein oder mehreren Benzoate, je nach Anwendungsfall, in einer Menge vorliegen, die ausgewählt ist aus 1,5 - 30 Gew.-%, 2,0 - 29 Gew.-%, 3,0 - 28 Gew.-% oder 4,0 - 27 Gew.-%, bevorzugt 5,0 - 26,0 Gew.-%;
oder
**dass** im Desinfektionsmittel in Form einer wässrigen flüssigen Zusammensetzung die ein oder mehreren Benzoate, je nach Anwendungsfall, in einer Menge vorliegen, die ausgewählt ist aus 0,1 bis 5,0 Gew.-%, 0,15 bis 5,0 Gew.-% oder 0,2 bis 4,5 Gew.-%, bevorzugt 0,25 bis 3,5 Gew.-%.

8. Desinfektionsmittel nach einem der vorangehenden Ansprüche 1 bis 7,
**dadurch gekennzeichnet,**

**dass** im Desinfektionsmittel in Form einer festen Zusammensetzung die ein oder mehreren nichtionischen Tenside, je nach Anwendungsfall, in einer Menge vorliegen, die ausgewählt ist aus 1,5 - 25 Gew.-%, 2,0 - 24 Gew.-%, 5 - 23 Gew.-% oder 7,5 - 22 Gew.-%;
oder
**dass** im Desinfektionsmittel in Form einer wässrigen flüssigen Zusammensetzung die ein oder mehreren nichtionischen Tenside, je nach Anwendungsfall, in einer Menge vorliegen, die ausgewählt ist aus 1,1 - 3,0 Gew.-% oder 1,1 - 2,9 Gew.-% oder 1,1 bis 2,8 Gew.-% oder 1,1 bis 2,7 Gew.-% oder 1,1 bis 2,6 Gew.-% oder 1,1 bis 2,5 Gew.-% oder 1,1 bis 2,4 Gew.-% oder 1,1 bis 2,3 Gew.-% oder 1,1 bis 2,2 Gew.-% oder 1,1 bis 2,1 Gew.-% oder 1,1 bis 2,0 Gew.-% oder 1,1 bis 1,9 Gew.-% oder 1,1 bis 1,8 Gew.-% oder 1,1 bis 1,7 Gew.-% oder 1,1 bis 1,6 oder 1,1 bis 1,5 Gew.-%, wobei die Untergrenze in den angegeben Bereichen auch 1,15 Gew.- oder 1,2 Gew.-% oder 1,25 Gew.-% oder 1,3 Gew.-% oder 1,35 Gew.-% oder 1,4 Gew.-% betragen kann.

9. Desinfektionsmittel nach einem der vorangehenden Ansprüche 1 bis 8,
**dadurch gekennzeichnet,**

**dass** im Desinfektionsmittel in Form einer festen Zusammensetzung die ein oder mehreren amphoteren Tenside, je nach Anwendungsfall, in einer Menge vorliegen, die ausgewählt ist aus 1,5 - 25 Gew.-%, 2,0 - 24 Gew.-% oder 5 - 23 Gew.-% oder 7,5 - 22 Gew.-%;
oder

**dass** im Desinfektionsmittel in Form einer wässrigen flüssigen Zusammensetzung die ein oder mehreren amphoteren Tenside, je nach Anwendungsfall, in einer Menge vorliegen, die ausgewählt ist aus 1,1, 1,5, 2,0 - 24 Gew.-%, 5 - 23 Gew.-% oder 7,5 - 22 Gew.-%.

10. Desinfektionsmittel nach einem der vorangehenden Ansprüche 1 bis 9,
**dadurch gekennzeichnet,**
**dass** die ein oder mehreren Mittel zur Feuchtigkeitsregulierung ausgewählt sind aus Glykolen mit 2 bis 10 Kohlenstoffen, insbesondere ausgewählt aus Butylenglykol, Hexylenglykol, Caprylylglykol, Capricglykol und 1,2-Hexandiol, sowie Glycin und Glycerin und Mischungen dieser.

11. Desinfektionsmittel nach einem der vorangehenden Ansprüche 1 bis 10,
**dadurch gekennzeichnet,**

**dass** ein oder mehrere Zusatzstoffe im Desinfektionsmittel enthalten sind, ausgewählt aus
einem Ingwer-Mazerat oder dem Wirkstoff 6-Gingerol und/oder einem oder mehreren Duftstoffen, und/oder
einem oder mehreren Solubilisierungsmitteln und/oder
einem oder mehreren einwertigen Salzen, insbesondere ausgewählt aus KCl, NaCl und/oder LiCl.

12. Desinfektionsmittel nach einem der vorangehenden Ansprüche 1 bis 11,
**dadurch gekennzeichnet,**

**dass** das Desinfektionsmittel in fester Zusammensetzung vorliegt, umfassend oder bestehend aus:

5 - 85 Gew.-% organische Säure(n);
1,5 - 30 Gew.-% Benzoat(e);
1,5 - 25 Gew.-% nichtionische(s) Tensid(e) und/oder 1,5 -25 Gew.-% oder 2,0 - 24 Gew.-% amphotere(s) Tensid(e)
0 bis 2,0 Gew.-% Ingwer-Mazerat oder 6-Gingerol;
0,1 bis 5,0 Gew.-% ein oder mehrere Mittel zur Feuchtigkeitsregulierung;
0 bis 2,0 Gew.-% ein oder mehrere Duftstoffe;
0 bis 25,0 Gew.-% ein oder mehrere einwertige Salze, insbesondere ausgewählt aus NaCl, KCl und/oder LiCl; und
0 bis 10 Gew.-% Solubilisierungsmittel;

oder dass das Desinfektionsmittel als wässrige flüssige Zusammensetzung vorliegt, umfassend oder bestehend aus:

0,1 bis 15 Gew.-%, bevorzugt 0,5 bis 12 Gew.-% organische Säure(n);
0,1 bis 5,0 Gew.-%, bevorzugt 0,25 bis 3,5 Gew.-% Benzoat(e);
1,1 - 3,0 Gew.-% nichtionische(s) Tensid(e) und/oder 1,1 - 24 Gew.-% amphotere(s) Tensid(e);
0,1% bis 5,0 Gew.-% ein oder mehrere Mittel zur Feuchtigkeitsregulierung;
0 bis 2,0 Gew.-% ein oder mehrere Duftstoffe;
0 bis 25,0 Gew.-%, bevorzugt 0,5 - 5 Gew.-% ein oder mehrere einwertige Salze, insbesondere ausgewählt aus NaCl, KCl und/oder LiCl;
0 bis 10 Gew.-% Solubilisierungsmittel;
und
67,0 bis 98,7 Gew.-% Wasser.

13. Verwendung eines Desinfektionsmittels nach einem der vorangehenden Ansprüche 1 bis 12 zur Hände-, Lebensmittel-, Flächendesinfektion und bei einem in-situ-Produktionsentkeimungsverfahren, wobei insbesondere eine Einwirkzeit des Desinfektionsmittels von 30 s ausreichend ist, um seine vollständige desinfizierende Wirkung zu zeigen, wobei die therapeutische Verwendung ausgenommen wird.

14. Verwendung des Desinfektionsmittels nach Anspruch 13 gegen *Escherichia coli, Pseudomonas aeruginosa, Staphylococcus aureus, Candida albicans und/oder Pluralibacter gergoviae,* wobei nach einer Einwirkzeit des Desinfektionsmittels von 30 s die Keimbelastung unter die Nachweisgrenze reduziert wird.

**Claims**

1. Disinfectant, comprising

   an organic acid selected from the group consisting of citric acid, lactic acid and succinic acid, or a mixture thereof;
   a benzoate selected from the group consisting of sodium benzoate, potassium benzoate or calcium benzoate, or mixtures thereof;
   one or more surfactants selected from the group of non-ionic surfactants and/or amphoteric surfactants which are soluble or emulsifiable or dispersible in water,
   the disinfectant is present in an aqueous liquid composition or solid compostion,
   wherein an aqueous liquid composition of the disinfectant comprises the one or more nonionic surfactants in an amount in the range of rom 1.1 to 3% by weight and/or the one or more amphoteric surfactants in an amount in the range of from 1.1 to 24% by weight,
   the solid composition is a concentrate and the aqueous liquid composition is the concentrate in diluted form in which the one or more non-ionic surfactants are present in an amount of from 1.1 to 3% by weight and/or the one or more amphoteric surfactants are present in an amount of from 1.1 to 24% by weight, and
   the desinfectant is intended for external use only,
   wherein the one or more nonionic surfactants are selected from the group consisting of fatty alcohol alkoxylates, alkyl polyglucosides or alkyl polyglycosides (APGs), each alone or mixtures thereof,
   wherein theone or more amphoteric surfactants are selected from the group consisting of amine oxides and wherein the one or more non-ionic surfactants, one or more moisture regulating agents are simultaneously present in an amount of 0.1 to 5% by weight,
   with the proviso that no surfactants other than the non-ionic and/or amphoteric surfactants are present, no C1-C3 (iso) alcohols are present, wherein C1-C3 (iso) alcohols are methanol, ethanol, n-propanol and isoropanol, and
   the compound chlorhexidine digluconate, sorbitan caprylate and phenoxyethanol are not present.

2. Disinfectant according to claim 1,
   **characterised in that**
   **in that** the nonionic surfactant(s) are selected from the group consisting of polyoxyethylene ethers of lauryl alcohols, C9-C11 pareth-8, C8-C10 alkyl polyglycosides or glucosides, each alone or mixtures thereof.

3. Disinfectant according to one of claims 1 or 2,
   **characterised in that**
   that the one or more non-ionic surfactants have an HLB value of > 7, in particular > 12, or have a cloud point of 40°C or greater (1 g in 100 ml water).

4. Disinfectant according to one of the preceding claims 1 to 3,
   **characterised in that**
   that the one or more amphoteric surfactants are selected from the group consisting of C12-C14 amine oxides.

5. Disinfectant according to any one of the preceding claim 1 to 4,
   **characterised in that**
   that the desinfectant is present in an aqueous liquid composition or as a solid composition in the form of a concentrate, in particular as a solution, emulsion, lotion, spray, gel, foam or as a solid in the form of a concentrate, the concntrate being water-soluble or emulsifiable or dispersible in water.

6. Disinfectant accroding to any one of the preceding claims 1 to 5,
   **characterised in that**

   that one or more organic acids are present in the disinfectant in the form of a solid composition, depending on the application, in an amount selected from
   5 to 85% by weight, 10 to 85% by weight, 15 to 85% by weight, 20 to 85% by weight, 25 to 85% by weight or 30 to 85% by weight;
   or
   that one or more organic acids are present in the disinfectant in the form of an aqueous liquid composition in an amount selected from 0.1 to 15% by weight, preferably 0.5 to 12% by weight, depending on the application.

7. Disinfectant according to any one of the preceding claim 1 to 6,

**characterised in that**

that the one or more benzoates are present in the disinfectant in the form of a solid composition, depending on the application, in an amount selected from 1.5 to 30% by weight, 2.0 to 29% by weight 3.0 to 28% by weight or 4.0-27% by weight, preferably 5.0 to 26.0% by weight;
or
that one or more benzoates are present in the disinfectant in the form of an aqueous liquid composition in an amount selected from 0.1 -to 5.0% by weight, 0.15 to 5.0% by weight, 0.2 -to 4.5% by weight, preferably 0.25 to 3.5% by weight

8. Disinfectant according to any one of the preeding claims 1 to 7,
   **characterised in that**

   **in that** the one or more non-ionic surfactants are present in the disinfectant in the form of a solid composition in an amount selected from 1.5 to 25% by weight, 2.0 to 24% by weight, 5 to23% by weight, 7.5 to 22% by weight, depending on the application;
   or
   that in the disinfectant in the form of an aqueous liquid composition the one or more non-ionic surfactants are present, depending on the appliction, in an amount selected from 1.1 to 3.0% by weight or 1.1 to2.9% by weight or 1.1 to 2.8% by weight or 1.1 to 2.7% by weight or 1.1 to 2.6% by weight or 1.1 to2.5% by weight or 1.1 to 2.4% by weight or 1.1 to 2.3% by weight or 1.1 to 2.2% by weight or 1.1 to 2.1% by weight or 1.1 to 2.0% by weight or 1.1 to 1.9% by weight or 1.1 to 1.8% by weight or 1.1 to 1.7% by weight or 1.1 to 1.6% by weight or 1.1 to 1.5% by weight, whereby the lower limit in the specified ranges can also be 1.15% by weight or 1,2% by weight or 1.25% by weight or 1.3% by weight or 1.35% by weight or 1.4% by weight

9. Disinfectant according to any one of the preceding claims 1 to 8,
   **characterised in that**

   **in that** the one or more amphoteric surfactants are present in the disinfectant in the form of a solid composition in an amount selected from 1.5 to 25% by weight, 2.0 to 24% by weight, 5 to 23% by weight or 7.5 to 22% by weight, depending on the application;
   or
   **in that** the one or more amphoteric surfactants are present in the disinfectant in the form of an aqueous liquid composition in an amount selected from from 1.1, 1.5 2.0 to 24% by weight, 5 to 23% by weight or 7.5 to 22% by weight, depending on the application;

10. Disinfectant according to any one of the preceding claims 1 to 9,
    **characterised in that**
    that the one or more agents for moisture regulation are selected from glycols with 2 to 10 carbons, in particular selected from butylene glycol, hexylene glycol, caprylyl glycol, capric glycol and 1,2-hexanediol, as well as glycine and glycerol and mixtures thereof.

11. Disinfectant according to any one of the preceding claims 1 to 10,
    **characterised in that**

    that one or more additives are contained in the disinfectant, selected from a ginger macerate or the active ingredient 6-gingerol and/or
    one or more fragrances, and/or
    one or more solubilising agents and/or
    one or more monovalent salts, in particular selected from KCl, NaCl and/or LiCl.

12. Disinfectant according to any one of the preceding claims 1 to 11,
    **characterised in that**

    that the disinfectant is present in a solid composition comprising or consisting of:

    5 to 85% by weight organic acid(s);
    1.5 to 30% by weight benzoate(s);

**EP 4 326 068 B1**

1.5 to 25% by weight non-ionic surfactant(s) and/or 1.5 - 25% by weight or
2.0 - 24% by weight amphoteric surfactant(s)
0 to 2.0% by weight ginger macerate or 6-gingerol;
0.1 to 5.0% by weight of one or more moisture regulating agents;
0 to 2.0% by weight of one or more fragrances;
0 to 25.0% by weight of one or more monovalent salts, in particular selected from NaCl, KCl and/or LiCl; and
0 to 10% by weight solubilising agent;

Or that the disinfectant is present as an aqueous liquid composition comprising or consisting of:

0.1 to 15% by weight, preferably 0.5 to 12% by weight of organic acid(s);
0.1 to 5.0 % by weight, preferably 0.25 to 3.5 % by weight of benzoate(s);
1, 1 to 3.0% by weight of non-ionic surfactant(s) and/or 1.1 to 24% by weight of amphoteric surfactant(s);
0.1 % to 5.0 % by weight of one more more moisture regulating agents;
0 to 2.0 % by weight of one or more fragrances;
0 to 25.0 % by weight preferably 0.5 - 5 % by weight of one or more monovalent salts, in particular selected from NaCl, KCl and/or LiCl;
0 to 10 % by weight solubilising agent;
and
67.0 to 98.7 % water by weight.

13. Use of a disinfectant according to one of the preceding claims 1 to 12 for hand, food und surface disinfection and in an in-situ production sterilisation process, wherein in particular an exposure time of the disinfectant of 30 s is sufficient to show a complete desinfecting effect, whith exception of therapeutic use.

14. Use of the disinfectant according to claim 13 against *Escherichia soli, Pseudomonas aeruginosa, Staphylococcus aureus, Candida albicans and/or Pluralibacter gergoviae,* where in the bacterial load is reduced to below the detection limit after an exposure time of the disinfectant of 30 seconds.

**Revendications**

1. Un désinfectant comprenant

un acide organique choisi dans le groupe constitué par l'acide citrique, l'acide lactique et l'acide succinique, ou un mélange de ceux-ci ;
un benzoate choisi dans le groupe constitué par le benzoate de sodium, le benzoate de potassium ou le benzoate de calcium, ou des mélanges de ceux-ci ;
un ou plusieurs agents tensioactifs choisis dans le groupe des agents tensioactifs non ioniques et/ou des agents tensioactifs amphotères qui sont solubles ou émulsionnables ou dispersables dans l'eau,
l'agent désinfectant est présent dans une composition liquide aqueuse ou dans une composition solide,
dans laquelle une composition liquide aqueuse de l'agent désinfectant contient un ou plusieurs agents tensioactifs non ioniques en une quantité comprise dans la plage de 1,1 à 3 % en poids et/ou contient un ou plusieurs agents tensioactifs amphotères en une quantité comprise dans la plage de 1,1 à 24 % en poids,
la composition solide est un concentré et la composition liquide aqueuse est le concentré sous forme diluée, dans laquelle les un ou plusieurs agents tensioactifs non ioniques sont contenus dans une quantité de 1,1 à 3 % en poids et/ou les un ou plusieurs agents tensioactifs amphotères sont contenus dans une quantité de 1,1 à 24 % en poids, et
l'agent désinfectant est destiné uniquement à un usage externe,
les un ou plusieurs agents tensioactifs non ioniques étant choisis dans le groupe constitué par les alcoxylates d'alcools gras, les alkylpolyglucosides ou les alkylpolyglycosides (APG), respectivement seuls ou des mélanges de ceux-ci,
les un ou plusieurs agents tensioactifs amphotères étant choisis dans le groupe constitué par les aminoxides, et en présence d'un ou de plusieurs agents tensioactifs non ioniques et simultanément d'un ou plusieurs agents de régulation de l'humidité, en une quantité de 0,1 à 5 % en poids,
à condition qu'aucun autre agent tensioactif que les agents tensioactifs non ioniques et/ou amphotères ne soit présent, qu'aucun (iso)alcool en C1-C3 ne soit présent, les (iso)alcools en C1-C3 représentant le méthanol, l'éthanol, le n-propanol et l'isopropanol, et que les composés digluconate de chlorhexidine, caprylate de

33

sorbitane et phénoxyéthanol ne soient pas présents.

2. Un désinfectant selon la revendication 1,
**caractérisé en ce que**
le ou les agents tensioactifs non ioniques sont choisis dans le groupe constitué par les éthers polyoxyéthylénés d'alcools lauryliques, le Pareth-8 en C9-C11, les alkylpolyglycosides ou les alkylpolyglucosides en C8-C10, seuls ou en mélange.

3. Un désinfectant selon l'une des revendications 1 ou 2,
**caractérisé en ce que**
les un ou plusieurs agents tensioactifs non ioniques présentent une valeur HLB de $\geq 7$, en particulier $\geq 12$ ou ont un point de trouble de 40 °C ou plus (1 g dans 100 ml d'eau).

4. Un désinfectant selon l'une des revendications précédentes 1 à 3,
**caractérisé en ce que**
les un ou plusieurs agents tensioactifs amphotères sont choisis dans le groupe constitué par les aminoxides en C12-C14.

5. Un désinfectant selon l'une des revendications 1 à 4 précédentes,
**caractérisé en ce que**
l'agent désinfectant se présente sous forme de composition liquide aqueuse ou sous forme de composition solide sous forme de concentré, notamment sous forme de solution, d'émulsion, de lotion, de spray, de gel, de mousse ou sous forme de solide sous forme de concentré, le concentré étant soluble dans l'eau ou émulsionnable ou dispersable dans l'eau.

6. Un désinfectant selon l'une des revendications précédentes 1 à 5,
**caractérisé en ce que**

dans l'agent désinfectant sous forme d'une composition solide, un ou plusieurs acides organiques sont présents, selon le cas d'application, en une quantité qui est choisie parmi 5 - 85 % en poids, 10 - 85 % en poids, 15 - 85 % en poids, 20 - 85 % en poids, 25 - 85 % en poids ou 30 - 85 % en poids ;
ou
**en ce que** dans l'agent désinfectant sous forme d'une composition liquide aqueuse, le ou les acides organiques sont présents, selon le cas d'application, en une quantité qui est choisie parmi 0,1 à 15 % en poids, de préférence 0,5 à 12 % en poids.

7. Un désinfectant selon l'une des revendications précédentes 1 à 6,
**caractérisé en ce que**

dans l'agent désinfectant sous forme d'une composition solide, les un ou plusieurs benzoates sont présents, selon le cas d'application, en une quantité qui est choisie parmi 1,5 - 30 % en poids, 2,0 - 29 % en poids, 3,0 - 28 % en poids ou 4,0 - 27 % en poids, de préférence 5,0 - 26,0 % en poids ; ou
**en ce que** dans l'agent désinfectant sous forme d'une composition liquide aqueuse, les un ou plusieurs benzoates sont présents, selon le cas d'application, en une quantité qui est choisie parmi 0,1 à 5,0 % en poids, 0,15 à 5,0 % en poids ou 0,2 à 4,5 % en poids, de préférence 0,25 à 3,5 % en poids.

8. Un désinfectant selon l'une des revendications 1 à 7 précédentes,
**caractérisé en ce que**

dans l'agent désinfectant sous forme de composition solide, les un ou plusieurs agents tensioactifs non ioniques sont présents, selon le cas d'application, en une quantité qui est choisie parmi 1,5 - 25 % en poids, 2,0 - 24 % en poids, 5 - 23 % en poids ou 7,5 - 22 % en poids ;
ou
**en ce que**, dans l'agent désinfectant sous forme d'une composition liquide aqueuse, les un ou plusieurs agents tensioactifs non ioniques sont présents, selon le cas d'application, en une quantité qui est choisie parmi 1,1 - 3,0 % en poids ou 1,1 - 2,9 % en poids ou 1,1 - 2,8 % en poids ou 1,1 - 2,7 % en poids ou 1,1 à 2,6 % en poids ou 1,1 à 2,5 % en poids ou 1,1 à 2,4 % en poids ou 1,1 à 2,3 % en poids ou 1,1 à 2,2 % en poids ou 1,1 à 2, 1 % en poids ou 1,1 à 2,0 % en poids ou 1,1 à 1,9 % en poids ou 1,1 à 1,8 % en poids ou 1,1 à 1,7 % en poids ou 1,1 à 1,6 ou 1,1 à 1,5 % en poids, la limite inférieure dans les plages indiquées pouvant également être de 1,15 % en poids ou 1,2 % en poids ou 1,25 % en poids ou 1,3 % en poids ou 1,35 % en poids ou 1,4 % en poids.

9.  Désinfectant selon l'une des revendications précédentes 1 à 8,
    **caractérisé en ce que**

    dans l'agent désinfectant sous forme de composition solide, les un ou plusieurs agents tensioactifs amphotères sont présents, selon le cas d'application, en une quantité qui est choisie parmi 1,5 - 25 % en poids, 2,0 - 24 % en poids ou 5 - 23 % en poids ou 7,5 - 22 % en poids ;
    ou
    **en ce que**, dans l'agent désinfectant sous forme d'une composition liquide aqueuse, les un ou plusieurs agents tensioactifs amphotères sont présents, selon le cas d'application, en une quantité qui est choisie parmi 1,1, 1,5, 2,0 - 24 % en poids, 5 - 23 % en poids ou 7,5 - 22 % en poids.

10. Désinfectant selon l'une des revendications précédentes 1 à 9,
    **caractérisé en ce que**
    les un ou plusieurs agents de régulation de l'humidité sont choisis parmi les glycols ayant de 2 à 10 carbones, en particulier choisis parmi le butylèneglycol, l'hexylèneglycol, le caprylylglycol, le capricglycol et le 1,2-hexanediol, ainsi que la glycine et la glycérine et leurs mélanges.

11. Désinfectant selon l'une quelconque des revendications 1 à 10 précédentes,

    **caractérisé en ce**
    **qu'**un ou plusieurs additifs sont contenus dans l'agent désinfectant, choisis parmi
    un macérât de gingembre ou le principe actif [6]-gingérol et/ou
    un ou plusieurs parfums, et/ou
    un ou plusieurs agents solubilisants et/ou
    un ou plusieurs sels monovalents, en particulier choisis parmi KCl, NaCl et/ou LiCl.

12. Désinfectant selon l'une des revendications précédentes 1 à 11, **caractérisé en ce que**

    l'agent désinfectant est en composition solide, comprenant ou consistant en

    5 - 85 % en poids d'acide(s) organique(s) ;
    1,5 - 30 % en poids de benzoate(s) ;
    1,5 - 25 % en poids d'agent(s) tensioactif(s) non ionique(s) et/ou 1,5 -25 % en poids ou 2,0 - 24 % en poids d'agent(s) tensioactif(s) amphotère(s)
    0 à 2,0 % en poids de macérât de gingembre ou de [6]-gingérol ;
    0,1 à 5,0 % en poids d'un ou plusieurs agents de régulation de l'humidité ;
    0 à 2,0 % en poids d'un ou de plusieurs parfums ;
    0 à 25,0 % en poids d'un ou plusieurs sels monovalents, en particulier choisis parmi NaCl, KCl et/ou LiCl ; et
    0 à 10 % en poids d'agent solubilisant ;

    ou **en ce que** le désinfectant se présente sous la forme d'une composition liquide aqueuse comprenant ou constituée de :

    0,1 à 15 % en poids, de préférence 0,5 à 12 % en poids d'acide(s) organique(s) ;
    0,1 à 5,0 % en poids, de préférence 0,25 à 3,5 % en poids de benzoate(s) ;
    1,1 - 3,0 % en poids d'agent(s) tensioactif(s) non ionique(s) et/ou 1,1 - 24 % en poids d'agent(s) tensioactif(s) amphotère(s) ;
    0,1 % à 5,0 % en poids d'un ou plusieurs agents de régulation de l'humidité
    0 à 2,0 % en poids d'un ou plusieurs parfums ;
    0 à 25,0 % en poids, de préférence 0,5 à 5 % en poids d'un ou plusieurs sels monovalents, choisis notamment parmi NaCl, KCl et/ou LiCl ;
    0 à 10 % en poids d'agent solubilisant ;
    et
    67,0 à 98,7 % en poids d'eau.

**13.** Utilisation d'un agent désinfectant selon l'une des revendications précédentes 1 à 12 pour la désinfection des mains, des aliments, des surfaces et lors d'un procédé de désinfection de production in situ, un temps d'action de l'agent désinfectant de 30 secondes étant notamment suffisant pour présenter son effet désinfectant complet, à l'exclusion de l'utilisation thérapeutique.

**14.** Utilisation de l'agent désinfectant selon la revendication 13 contre *Escherichia coli, Pseudomonas aeruginosa, Staphylococcus aureus, Candida albicans et/ou Pluralibacter gergoviae,* dans laquelle, après un temps d'action de l'agent désinfectant de 30 s, la charge bactérienne est réduite en dessous de la limite de détection.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3702546 A1
- EP 2677867 B1
- JP 2002253188 A
- EP 2135507 A1
- DE 10223934 A1
- DE 102007045210 A1
- DE 4200066 A1
- WO 9609761 A1
- EP 0783245 B1
- WO 96097761 A1
- DE 102006010809 A1
- US 20200120928 A1
- WO 2018022016 A1
- WO 2020165566 A1
- US 2014275264 A1

- WO 9944444 A1
- DE 3933964 C1
- WO 91000089 A1
- WO 2012139995 A1
- US 2002168464 A1
- DE 102015113641 A1
- WO 2014062892 A1
- ES 1258594 U
- WO 2020027797 A1
- WO 2019194780 A2
- CN 110755289 A
- WO 2019209223 A2
- WO 2012076409 A1
- WO 2019175864 A1
- US 2020022905 A1

### In der Beschreibung aufgeführte Nicht-Patentliteratur

- **BLAGOJEVIC S.M. et al.** Synergism and Physicochemical Properties of Anionic/Amphoteric Surfactant Mixtures with Nonionic Surfactant of Amine Oxide Type. *Russian Journal of Physical Chemistry A, Chemical Society*, 2017, vol. 91 (13), 2690-2695
- *Amphiphile Moleküle: Ein einführender Überblick*, 06 June 2005, 1-19, https://www.tuchemnitz.de/physik/OSMP/Soft/V 09.pdf
- *Euroxide D40 performance enhancer in hard surface cleaners*, 2016, 1-2, https://eocqroup.com/sites/default/files/ E-OC%20Surfactants%20Product%20Leaflet%20Euroxide%20D40%20July%20216.pdf
- **STEWARD LISSA**. *Acidity Index of Common mouthwashes*, 02 January 2016, https:// www.hygienesuperstar.com/wp-content/uploads/2019/05/acidity.pdf

- **BIRNIE C. R. et al.** Antimicrobial evaluation of N-alkyl betaines and N-alkyl-N,N-dimethylamine oxides with variations in chain length. *Antimicrobial Agents and Chemotherapy, American Society for Microbiology*, 01 September 2000, vol. 44 (9), 2514-2517
- **MATSUMURA S. et al.** Surface Activity, Antimicrobial Properties and Biodegradability of n-Alkyl Xylosides, Xylobiosides, and Xylotriosides. *Nihon Yukagaku Kaishi Journal of Japan Oil Chemists' Society, Nihon Yukagakkai*, 01 January 1998, vol. 47 (3), 247-255
- **GLOVER RICHARD E. et al.** An EPR Investigation of Surfactant Action On Bacterial Membranes. *Fems Microbiology Letters*, 01 August 1999, vol. 177 (1), 57-62
- **VON RUCHI BADONI SEMWAL** ; **DEEPAK KUMAR SEMWAL** ; **SANDRA COMBRINCK** ; **ALVARO M. VILJOEN**. *Phytochemistry*, September 2015, vol. 117, 554-568